# EUROPEAN PATENT APPLICATION

(11) **EP 4 492 863 A1**
(43) Date of publication of application: **15.01.2025**
(21) Application number: 23795022.5
(22) Date of filing: 12.04.2023
(51) Int. Cl.: H04W 28/06, H04W 72/04

(54) **INFORMATION TRANSMISSION METHOD AND COMMUNICATION APPARATUS**

(30) Priority: 29.04.2022 CN 202210467193
(71) Applicant: Huawei Technologies Co., Ltd., Shenzhen, Guangdong 518129 (CN)
(72) Inventor: LI, Ruijie, Shenzhen, Guangdong 518129 (CN); GUAN, Lei, Shenzhen, Guangdong 518129 (CN)
(74) Representative: MERH-IP Matias Erny Reichl Hoffmann Patentanwälte PartG mbB
(86) International application number: PCT/CN2023/087774
(87) International publication number: WO 2023/207589

(57) **Abstract**

An information transmission method and a communication apparatus are provided. The method may include: A terminal device receives first information from a network device through a first carrier, where the first information includes at least one of the following: resource information used by the terminal device to access the network device through a second carrier, partial information or all information in first common information, and resource information for transmitting second common information through the second carrier, where the first common information and the second common information are used by the terminal device to access the network device through the second carrier; and the terminal device performs message transmission with the network device through the second carrier. In this application, the network device may send, to the terminal device through the first carrier, some information required when the terminal device accesses the network device through the second carrier. In this way, signaling overheads caused by transmitting the foregoing information on the second carrier can be reduced, and energy consumption overheads caused by frequently transmitting the foregoing information on the second carrier can be reduced.

## Description

This application claims priority to Chinese Patent Application No. 202210467193.6, filed with the China National Intellectual Property Administration on April 29, 2022 and entitled "INFORMATION TRANSMISSION METHOD AND COMMUNICATION APPARATUS", which is incorporated herein by reference in its entirety.

### TECHNICAL FIELD

Embodiments of this application relate to the field of wireless communication, and more specifically, to an information transmission method and a communication apparatus.

### BACKGROUND

With evolution of a communication system, more antennas are configured for a network device. Consequently, overall power consumption of the network device increases, and how to reduce energy consumption of the network device is increasingly concerned. One of main technical means for reducing the energy consumption of the network device is to reduce signal transmissions of the network device.

The network device needs to periodically send common information on each carrier, so that a terminal device identifies the network device on each carrier, and the terminal device can access a network on each carrier.

However, on some carriers, even if the network device has no data to transmit, the network device still needs to periodically send some common information. The common information may be used by the terminal device to identify the network device, so that the terminal device accesses the network. How to reduce energy consumption overheads caused by the common information is a problem worth considering.

### SUMMARY

This application provides an information transmission method and a communication apparatus, to reduce energy consumption overheads caused by periodically sending common information by a network device.

According to a first aspect, an information transmission method is provided. The method may be performed by a terminal device, or may be performed by a component (such as a chip or a circuit) of the terminal device. This is not limited in this application.

The method may include: receiving first information from a network device through a first carrier, where the first information includes at least one of the following: resource information used to access the network device through a second carrier, partial information or all information in first common information, and resource information for transmitting second common information through the second carrier, where the first common information and the second common information are for accessing the network device through the second carrier; and performing message transmission with the network device through the second carrier.

Based on the foregoing technical solution, the network device may send, to the terminal device through the first carrier, some common information required when the terminal device accesses the network device through the second carrier. In this way, the terminal device can directly access the second carrier when there is a requirement for transmitting information through the second carrier. When there is no requirement for transmitting the information through the second carrier, the network device does not need to transmit information on the second carrier, and the terminal device does not need to access a network through the second carrier, so that the network device does not need to frequently send common information on the second carrier either. In comparison to overheads for always periodically sending the common information by the network device on the second carrier, overheads for sending the common information by the network device in this solution can be reduced.

With reference to the first aspect, in some implementations of the first aspect, the first common information is system information that includes configuration information of a primary cell.

With reference to the first aspect, in some implementations of the first aspect, the second common information is information for cell search, or the second common information is information for downlink synchronization.

With reference to the first aspect, in some implementations of the first aspect, the first common information is for synchronization between the terminal device and the network device on the second carrier.

With reference to the first aspect, in some implementations of the first aspect, the second common information is used by the terminal device to randomly access the network device.

With reference to the first aspect, in some implementations of the first aspect, the first information further includes a time window, where the time window is an effective time range for detecting a signal sent by the network device through the second carrier.

Based on the foregoing technical solution, the terminal device may detect, in the time window, the signal sent by the network device through the second carrier, and outside the time window, the terminal device does not need to detect the signal sent by the network device through the second carrier. The time window is configured, so that an excessively long delay caused when the terminal device keeps detecting the signal sent by the network device through the second carrier can be avoided, and experience of the terminal device can be improved.

With reference to the first aspect, the first information further includes a frequency domain position of the second carrier.

Based on the foregoing technical solution, the terminal device may learn of a frequency domain range of the second carrier, and may further perform message transmission with the network device through the second carrier.

With reference to the first aspect, in some implementations of the first aspect, the performing message transmission with the network device through the second carrier includes: receiving the partial information or all the information in the first common information through the second carrier, and/or receiving the second common information through the second carrier.

With reference to the first aspect, in some implementations of the first aspect, the method further includes: sending a first message to the network device through the first carrier, where the first message indicates to access the network device through the second carrier, and a time-frequency resource and/or a sequence of the first message are/is determined based on the first information.

With reference to the first aspect, in some implementations of the first aspect, the first message is a message 1 (Msg 1) in a random access process.

Based on the foregoing technical solution, the terminal device may notify, through the first message, the network device that the terminal device needs to access the network through the second carrier, or notify, through the first message, the network device of a requirement for transmitting information through the second carrier. After receiving the first message, the network device may send second information to the terminal device on the second carrier. This avoids a case in which the network device frequently and periodically sends the second information on the second carrier, reduces signaling overheads of the network device on the second carrier, and reduces energy consumption of the network device on the second carrier.

With reference to the first aspect, in some implementations of the first aspect, the method further includes: receiving second information from the network device through the second carrier, where the second information includes at least one of the following information: a response message of the first message, downlink control information for scheduling the response message of the first message, or downlink control information for scheduling the second common information.

With reference to the first aspect, in some implementations of the first aspect, the response message of the first message is a message 2 (Msg 2) in the random access process.

With reference to the first aspect, in some implementations of the first aspect, the method further includes: performing beam training based on the second information.

Based on the foregoing technical solution, the terminal device performs beam training based on the second information.

With reference to the first aspect, in some implementations of the first aspect, the second information includes a plurality of pieces of information, and beam training is completed based on the plurality of pieces of information.

With reference to the first aspect, in some implementations of the first aspect, the performing message transmission with the network device through the second carrier includes: sending a second message to the network device through the second carrier, where the second message is for accessing the network device.

With reference to the first aspect, in some implementations of the first aspect, the second message is a random access request for accessing the network device through the second carrier.

With reference to the first aspect, in some implementations of the first aspect, the second message is a Msg 1.

With reference to the first aspect, in some implementations of the first aspect, before the sending a second message to the network device through the second carrier, the method further includes: receiving the second common information from the network device through the second carrier; and the sending a second message to the network device through the second carrier includes: sending, based on the second common information and the first information, the second message to the network device through the second carrier.

With reference to the first aspect, in some implementations of the first aspect, the method further includes: receiving third common information from the network device through the second carrier; and the sending, based on the second common information and the first information, the second message to the network device through the second carrier includes: sending, based on the second common information, the first information, and the third common information, the second message to the network device through the second carrier, where the third common information includes all the information in the first common information; or the first information includes the partial information in the first common information, and the third common information includes information in the first common information other than the partial information.

Based on the foregoing technical solution, the first common information may be transmitted on the first carrier. In this way, the first common information does not need to be frequently transmitted on the second carrier; or the partial information in the first common information is transmitted on the first carrier, and a remaining part of the first common information is transmitted on the second carrier. In this way, signaling overheads and energy consumption caused by transmitting the first common information on the second carrier can be reduced.

With reference to the first aspect, in some implementations of the first aspect, the method further includes: after the sending a second message to the network device through the second carrier, the method further includes: receiving the second common information and/or a response message of the second message from the network device through the second carrier.

With reference to the first aspect, in some implementations of the first aspect, the response message of the second message is a Msg 2, or the response message of the second message is a random access response.

With reference to the first aspect, in some implementations of the first aspect, the performing message transmission with the network device through the second carrier includes: sending a third message to the network device through the second carrier, where a time-frequency resource and/or a sequence used by the third message are/is determined based on the first information, and the third message is for accessing the network device.

With reference to the first aspect, in some implementations of the first aspect, before the performing message transmission with the network device through the second carrier, the method further includes: sending indication information to the network device through the first carrier, where the indication information indicates whether to access the network device through the second carrier; and the performing message transmission with the network device through the second carrier includes: performing message transmission with the network device through the second carrier if the indication information indicates to access the network device through the second carrier.

Based on the foregoing technical solution, the terminal device may indicate, to the network device, whether to access the network device through the second carrier. The terminal device performs message transmission with the network device through the second carrier if the terminal device accesses the network device through the second carrier.

With reference to the first aspect, in some implementations of the first aspect, the indication information includes information indicating whether to access the network device through the second carrier.

With reference to the first aspect, in some implementations of the first aspect, a resource of the indication information indicates whether to access the network device through the second carrier.

Based on the foregoing technical solution, sending of the resource of the indication information may indicate, to the network device, whether the terminal device is to access the network device through the second carrier, that is, implicitly indicate, through the resource, whether the terminal device is to access the network device through the second carrier.

With reference to the first aspect, in some implementations of the first aspect, if the resource for transmitting the indication information is a first resource, the first resource is used by the network device to determine that the terminal device is to access the network device through the second carrier; or if the resource for transmitting the indication information is a second resource, the second resource is used by the network device to determine that the terminal device is to access the network device through the first carrier.

With reference to the first aspect, in some implementations of the first aspect, the method further includes: receiving a first synchronization signal from the network device through the first carrier; and performing uplink synchronization based on the first synchronization signal.

With reference to the first aspect, in some implementations of the first aspect, the method further includes: receiving a second synchronization signal from the network device through the second carrier; and performing downlink synchronization based on the second synchronization signal; or performing uplink synchronization based on the second synchronization signal and an offset, where the offset represents an offset between receiving the first synchronization signal and receiving the second synchronization signal.

With reference to the first aspect, in some implementations of the first aspect, the method further includes: receiving the offset from the network device through the second carrier.

With reference to the first aspect, in some implementations of the first aspect, the offset is carried in a third message, and the third message is for accessing the network device.

With reference to the first aspect, in some implementations of the first aspect, the third message carrying the offset may be a Msg 2 or a Msg 4.

According to a second aspect, an information transmission method is provided. The method may be performed by a network device, or may be performed by a component (such as a chip or a circuit) of the network device. This is not limited in this application.

The method may include: sending first information to a terminal device through a first carrier, where the first information includes at least one of the following: resource information used to access a network device through a second carrier, partial information or all information in first common information, and resource information for transmitting second common information through the second carrier, where the first common information and the second common information are for accessing the network device through the second carrier; and performing message transmission with the terminal device through the second carrier.

With reference to the second aspect, in some implementations of the second aspect, the first common information is system information that includes configuration information of a primary cell.

With reference to the second aspect, in some implementations of the second aspect, the second common information is information for cell search, or the second common information is information for downlink synchronization.

With reference to the second aspect, in some implementations of the second aspect, the first information further includes a time window, where the time window is an effective time range for detecting a signal sent by the network device through the second carrier.

With reference to the second aspect, in some implementations of the second aspect, the first information further includes a frequency domain position of the second carrier.

With reference to the second aspect, in some implementations of the second aspect, the performing message transmission with the terminal device through the second carrier includes: sending the partial information or all the information in the first common information to the terminal device through the second carrier, and/or sending the second common information to the terminal device through the second carrier.

With reference to the second aspect, in some implementations of the second aspect, the method further includes: receiving a first message from the terminal device through the first carrier, where the first message indicates to access the network device through the second carrier, and a time-frequency resource and/or a sequence of the first message are/is determined based on the first information.

With reference to the second aspect, in some implementations of the second aspect, the method further includes: sending second information to the terminal device through the second carrier, where the second information includes at least one of the following information: a response message of the first message, downlink control information for scheduling the response message of the first message, or downlink control information for scheduling the second common information.

With reference to the second aspect, in some implementations of the second aspect, a second message from the terminal device is received through the second carrier, where the second message is for accessing the network device.

With reference to the second aspect, in some implementations of the second aspect, before the second message from the terminal device is received through the second carrier, the method further includes: sending the second common information to the terminal device through the second carrier.

With reference to the second aspect, in some implementations of the second aspect, the method further includes: sending third common information to the terminal device through the second carrier, where the third common information includes all the information in the first common information; or the first information includes the partial information in the first common information, and the third common information includes information in the first common information other than the partial information.

With reference to the second aspect, in some implementations of the second aspect, after the second message from the terminal device is received through the second carrier, the method further includes: receiving the second common information and/or a response message of the second message from the network device through the second carrier.

With reference to the second aspect, in some implementations of the second aspect, before the performing message transmission with the terminal device through the second carrier, the method further includes: receiving indication information from the terminal device through the second carrier, where the indication information indicates whether to access the network device through the second carrier; and the performing message transmission with the terminal device through the second carrier includes: performing message transmission with the terminal device through the second carrier if the indication information indicates to access the network device through the second carrier.

With reference to the second aspect, in some implementations of the second aspect, the indication information includes information indicating whether to access the network device through the second carrier.

With reference to the second aspect, in some implementations of the second aspect, a resource of the indication information indicates whether to access the network device through the second carrier.

With reference to the second aspect, in some implementations of the second aspect, the method further includes: sending a first synchronization signal to the terminal device through the first carrier; and sending a second synchronization signal to the terminal device through the second carrier, where the second synchronization signal is for downlink synchronization, where the first synchronization signal is for uplink synchronization, or the second synchronization signal and an offset are for uplink synchronization, where the offset represents an offset between receiving the first synchronization signal and receiving the second synchronization signal.

With reference to the second aspect, in some implementations of the second aspect, the offset is sent to the terminal device through the second carrier.

With reference to the second aspect, in some implementations of the second aspect, the offset is carried in a third message, and the third message is for accessing the network device.

With reference to the second aspect, in some implementations of the first aspect, the third message carrying the offset may be a Msg 2 or a Msg 4.

For beneficial effects of the second aspect and the possible designs, refer to related descriptions of the first aspect. Details are not described herein again.

According to a third aspect, an information transmission method is provided. The method may be performed by a terminal device, or may be performed by a component (such as a chip or a circuit) of the terminal device. This is not limited in this application. For ease of description, the following uses an example in which the method is performed by the terminal device for description.

The method may include: The terminal device sends indication information to a network device through a first carrier, where the indication information indicates to the network device that the terminal device is to access the network device through a second carrier; and the terminal device receives a message from the network device through the second carrier.

With reference to the third aspect, in some implementations of the third aspect, that the terminal device receives a message from the network device through the second carrier may be replaced with: the terminal device performs message transmission with the network device through the second carrier. For a specific implementation, refer to descriptions in the first aspect. Details are not described herein again.

Based on the foregoing technical solution, the terminal device may send an indication message to the network device, and after receiving the indication of the terminal device, the network device sends the message to the terminal device on the second carrier. In this way, the message does not need to be frequently transmitted on the second carrier, signaling overheads on the second carrier are reduced, and energy consumption overheads caused by frequent message transmission on the second carrier are reduced.

With reference to the third aspect, in some implementations of the third aspect, before the terminal device sends the indication information to the network device through the first carrier, the method further includes: The terminal device receives a synchronization signal from the network device through the first carrier.

With reference to the third aspect, in some implementations of the third aspect, the indication information includes information indicating that the terminal device is to access the network device through the second carrier.

With reference to the third aspect, in some implementations of the third aspect, a resource of the indication information indicates to the network device that the terminal device is to access the network device through the second carrier.

With reference to the third aspect, in some implementations of the third aspect, before the terminal device receives the message from the network device through the second carrier, the method further includes: The terminal device receives first information from the network device through the first carrier, where the first information includes at least one of the following: resource information used by the terminal device to access the network device through the second carrier, partial information or all information in first common information, and resource information for transmitting second common information through the second carrier, where the first common information and the second common information are used by the terminal device to access the network device through the second carrier.

For related content of the first information, refer to related descriptions in the first aspect. Details are not described herein again.

For beneficial effects of the third aspect and the possible designs, refer to related descriptions of the first aspect. Details are not described herein again.

According to a fourth aspect, an information transmission method is provided. The method may be performed by a network device, or may be performed by a component (such as a chip or a circuit) of the network device. This is not limited in this application. For ease of description, the following uses an example in which the method is performed by the network device for description.

The method may include: The network device receives indication information from a terminal device through a first carrier, where the indication information indicates to the network device that the terminal device is to access the network device through a second carrier; and the network device performs message transmission with the terminal device through the second carrier.

With reference to the fourth aspect, in some implementations of the fourth aspect, before the network device receives the indication information from the terminal device through the first carrier, the method further includes: The network device sends a synchronization signal to the terminal device through the first carrier.

With reference to the fourth aspect, in some implementations of the fourth aspect, the indication information includes information indicating that the terminal device is to access the network device through the second carrier.

With reference to the fourth aspect, in some implementations of the fourth aspect, a resource of the indication information indicates to the network device that the terminal device is to access the network device through the second carrier.

With reference to the fourth aspect, in some implementations of the fourth aspect, before the network device performs message transmission with the terminal device through the second carrier, the method further includes: The network device sends first information to the terminal device through the first carrier, where the first information includes at least one of the following: resource information used by the terminal device to access the network device through the second carrier, partial information or all information in first common information, and resource information for transmitting second common information through the second carrier, where the first common information and the second common information are used by the terminal device to access the network device through the second carrier.

For beneficial effects of the fourth aspect and the possible designs, refer to related descriptions of the first aspect. Details are not described herein again.

According to a fifth aspect, an information transmission method is provided. The method may be performed by a terminal device, or may be performed by a component (such as a chip or a circuit) of the terminal device. This is not limited in this application. For ease of description, the following uses an example in which the method is performed by the terminal device for description.

The method may include: The terminal device receives a first synchronization signal from a network device through a first carrier; the terminal device receives a second synchronization signal from the network device through a second carrier; the terminal device performs downlink synchronization based on the second synchronization signal; and the terminal device performs uplink synchronization based on the first synchronization signal, or the terminal device performs uplink synchronization based on the second synchronization signal and an offset, where the offset represents an offset between receiving the first synchronization signal and receiving the second synchronization signal by the terminal device.

For example, for related solutions of the first carrier and the second carrier, refer to the descriptions in the first aspect to the fourth aspect. Details are not described herein again.

With reference to the fifth aspect, in some implementations of the fifth aspect, the method further includes: The terminal device receives the offset from the network device through the second carrier.

With reference to the fifth aspect, in some implementations of the fifth aspect, the offset is carried in a third message, and the third message is used by the terminal device to access the network device.

According to a sixth aspect, an information transmission method is provided. The method may be performed by a network device, or may be performed by a component (such as a chip or a circuit) of the network device. This is not limited in this application. For ease of description, the following uses an example in which the method is performed by the network device for description.

The method may include: The network device sends a first synchronization signal to a terminal device through a first carrier; and the network device sends a second synchronization signal to the terminal device through a second carrier, where the second synchronization signal is for downlink synchronization, where the first synchronization signal is for uplink synchronization, or the second synchronization signal and an offset are for uplink synchronization, where the offset represents an offset between receiving the first synchronization signal and receiving the second synchronization signal.

With reference to the sixth aspect, in some implementations of the sixth aspect, the network device sends the offset to the terminal device through the second carrier.

For related solutions of the first carrier and the second carrier, refer to the descriptions in the first aspect to the fourth aspect. Details are not described herein again.

With reference to the sixth aspect, in some implementations of the sixth aspect, the offset is carried in a third message, and the third message is used by the terminal device to access the network device.

According to a seventh aspect, a communication apparatus is provided. The apparatus is configured to perform the method in any possible implementation of the first aspect to the sixth aspect. Specifically, the apparatus may include a unit and/or a module configured to perform the method in any possible implementation of the first aspect to the sixth aspect, for example, a processing unit and/or a communication unit.

In an implementation, the apparatus is a communication device (for example, a network device or a terminal device). When the apparatus is the communication device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in the communication device (for example, the network device or the terminal device). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be the at least one processor, a processing circuit, a logic circuit, or the like.

According to an eighth aspect, a communication apparatus is provided. The apparatus includes at least one processor, configured to execute a computer program or instructions stored in a memory, to perform the method in any possible implementation of the first aspect to the sixth aspect. Optionally, the apparatus further includes a memory, configured to store the computer program or the instructions. Optionally, the apparatus further includes a communication interface, and the processor reads, via the communication interface, the computer program or the instructions stored in the memory.

In an implementation, the apparatus is a communication device (for example, a network device or a terminal device).

In another implementation, the apparatus is a chip, a chip system, or a circuit used in the communication device (for example, the network device or the terminal device).

According to a ninth aspect, this application provides a processor, configured to perform the method provided in the first aspect to the sixth aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method in any possible implementation of the first aspect to the sixth aspect.

According to an eleventh aspect, a computer program product including instructions is provided. When the computer program product runs on a computer, the computer is enabled to perform the method in any possible implementation of the first aspect to the sixth aspect.

According to a twelfth aspect, a communication system is provided, including at least one network device and at least one terminal device.

### BRIEF DESCRIPTION OF DRAWINGS

FIG. 1 is a diagram of a wireless communication system applicable to an embodiment of this application;
FIG. 2 is another diagram of a wireless communication system applicable to an embodiment of this application;
FIG. 3 is a diagram of an SSB in time domain and frequency domain;
FIG. 4 is a diagram of a timing advance (timing advance, TA);
FIG. 5 is a diagram of an information transmission method 500 according to an embodiment of this application;
FIG. 6 is a diagram of an information transmission method 600 according to an embodiment of this application;
FIG. 7 is a diagram of TA mismatch;
FIG. 8 is a diagram of timing synchronization applicable to an embodiment of this application;
FIG. 9 is a diagram of a communication apparatus 900 according to an embodiment of this application;
FIG. 10 is a diagram of another communication apparatus 1000 according to an embodiment of this application; and
FIG. 11 is a diagram of a chip system 1100 according to an embodiment of this application.

### DESCRIPTION OF EMBODIMENTS

The following describes technical solutions of embodiments of this application with reference to accompanying drawings.

The technical solution provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solution provided in this application may be further applied to a future communication system, for example, a 6th generation (6th generation, 6G) mobile communication system. The technical solution provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or other communication systems.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a communication device, a wireless communication device, a user agent, or a user apparatus.

The terminal device may be a device that provides voice/data for a user, for example, a handheld device or a vehicle-mounted device with a wireless connection function. Currently, examples of some terminals are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a mix reality (mix reality, MR) device, a wireless terminal in industrial control (industrial control), a wireless terminal in self-driving (self-driving) or intelligent driving, a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a wearable device, a terminal device in a 5G network, a terminal device in a future evolved public land mobile network (public land mobile network, PLMN), or the like. This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that enables the terminal device to access a wireless network. The base station may cover various names below in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multi-standard radio (motor slide retainer, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a radio head (remote radio head, RRH), a central unit (central unit, CU), a distributed unit (distributed unit, DU), or a located node. The base station may be a macro base station, a micro base station, a relay node, a donor node, or the like, or a combination thereof. The base station may be further a communication module, a modem, or a chip disposed in the foregoing device or apparatus. The base station may alternatively be a mobile switching center, a device that undertakes a base station function in D2D, V2X, and M2M communication, a network side device in a 6G network, a device that undertakes a base station function in a future communication system, or the like. The base station may support networks using a same access technology or different access technologies. A specific technology and a specific device form that are used by the network device are not limited in embodiments of this application.

The base station may be fastened or movable. For example, a helicopter or a drone may be configured to serve as a mobile base station, and one or more cells may move based on a position of the mobile base station. In other examples, the helicopter or the drone may be configured as a device to communicate with another base station.

In some deployments, the network device mentioned in embodiments of this application may be a device including the CU, a device including the DU, or a device including the CU and the DU, or a device including a CU node (central unit-control plane (central unit-control plane, CU-CP)), a user plane CU node (central unit-user plane (central unit-user plane, CU-UP)), and a DU node.

The network device and the terminal device may be deployed on land, including an indoor scenario or an outdoor scenario, and a handheld scenario or a vehicle-mounted scenario; or may be deployed on water; or may be deployed on an airplane, a balloon, and a satellite in the air. Scenarios in which the network device and the terminal device are located are not limited in embodiments of this application.

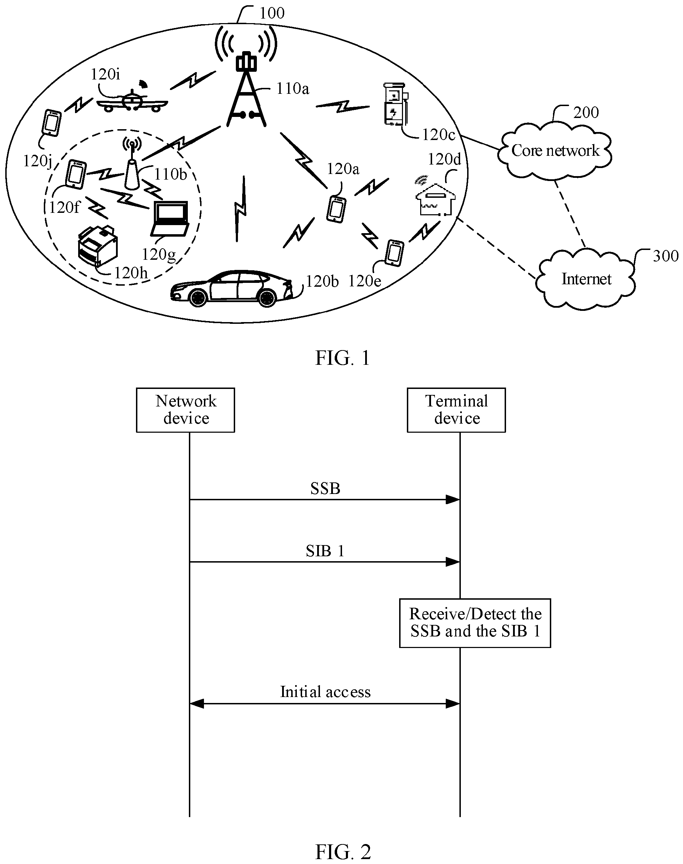

First, a network architecture applicable to this application is briefly described with reference to FIG. 1 and FIG. 2.

FIG. 1 is a diagram of a wireless communication system applicable to an embodiment of this application. As shown in FIG. 1, the wireless communication system may include a radio access network 100. Optionally, the wireless communication system further includes a core network 200. Optionally, the wireless communication system further includes an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or a function of the core network device and a logical function of the radio access network device may be integrated into a same physical device, or some functions of the core network device and some functions of the radio access network device may be integrated into one physical device. A wired or wireless manner may be used for a connection between terminals and a connection between radio access network devices. FIG. 1 is only a diagram. The communication system may further include other network devices, for example, may further include a wireless relay device and a wireless backhaul device. This is not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a media access control (media access control, MAC) layer of the base station, and may further complete functions of a part or all of a physical layer. For specific descriptions of the foregoing protocol layers, reference may be made to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which a base station serves as the radio access network device.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The base station and the terminal may be fastened or movable. The base station and the terminal may be deployed on land, including an indoor or outdoor scenario, and a handheld or a vehicle-mounted scenario; or may be deployed on water; or may be deployed on an airplane, a balloon, and a man-made satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base stations, and between the terminals may be performed based on a licensed spectrum, or may be performed based on an unlicensed spectrum, or may be performed based on both the licensed spectrum and the unlicensed spectrum. Communication may be performed based on a spectrum below 6 gigahertz (gigahertz, GHz), or may be performed based on a spectrum above 6 GHz, or may be performed based on both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of a terminal may be performed by a module (for example, a chip or a modem) in the terminal, or may be performed by an apparatus including the function of the terminal.

It should be understood that, FIG. 1 is merely a simplified diagram of an example for ease of understanding. The wireless communication system may further include another network device or may further include another terminal device, which is not shown in FIG. 1. Embodiments of this application may be applicable to any communication scenario in which a transmit end device communicates with a receive end device.

FIG. 2 is another diagram of a wireless communication system applicable to an embodiment of this application. As shown in FIG. 2, the wireless communication system may include a receive end device and a transmit end device. For example, the receive end device may be a terminal device, for example, a terminal device 120 shown in FIG. 1, and the transmit end device may be a network device, for example, a network device 110 shown in FIG. 1. The transmit end device may send a synchronization signal block (synchronization signal block, SSB) and a system information block 1 (system information block 1, SIB 1) to the receive end device. Correspondingly, the receive end device receives or detects the SSB and the SIB 1. If the receive end device receives the SSB and the SIB 1, the receive end device may perform initial access. It may be understood that, that the terminal device performs initial access mentioned in embodiments of this application represents that the terminal device may perform an operation related to initial access based on received information such as the SSB and the SIB 1, and does not mean, as a limitation, that the terminal device can definitely successfully access the network device.

It should be understood that, FIG. 2 is merely a simplified diagram of an example for ease of understanding. The wireless communication system may further include more steps, which are not shown in FIG. 2.

For ease of understanding of embodiments of this application, terms in this application are briefly described.

It may be understood that, basic concepts described below are briefly described by using basic concepts defined in a current protocol as examples, but it does not mean, as a limitation, that embodiments of this application can be applied only to a current existing system. Therefore, a name that appears when the current existing system is used as an example for description is a functional description, and a specific name is not limited. The name represents only a function, and may be correspondingly extended to another system, for example, 4G or a future communication system.

### 1. Beam

The beam may be understood as a spatial domain filter (spatial domain filter), or referred to as a spatial filter (spatial filter), a spatial parameter (spatial parameter), or spatial domain behavior. A beam used to send a signal may be referred to as a transmission beam (transmission beam, Tx beam), or may be referred to as a spatial domain transmission filter (spatial domain transmission filter), a spatial transmission parameter (spatial transmission parameter), or transmission spatial domain behavior. A beam used to receive a signal may be referred to as a reception beam (reception beam, Rx beam), or may be referred to as a spatial domain receive filter (spatial domain receive filter), a spatial reception parameter (spatial RX parameter), or reception spatial domain behavior.

The transmission beam may alternatively be distribution of signal strength formed in different directions in space after the signal is transmitted via an antenna. Similarly, the reception beam may alternatively be distribution of signal strength in different directions in space after a radio signal is received from the antenna.

In addition, the beam may be a wide beam, a narrow beam, or a beam of another type. A beam forming technology may be a beamforming technology or another technology. The beamforming technology may be specifically a digital beamforming technology, an analog beamforming technology, a hybrid digital/analog beamforming technology, or the like.

### 2. Synchronization signal block (synchronization signal block, SSB)

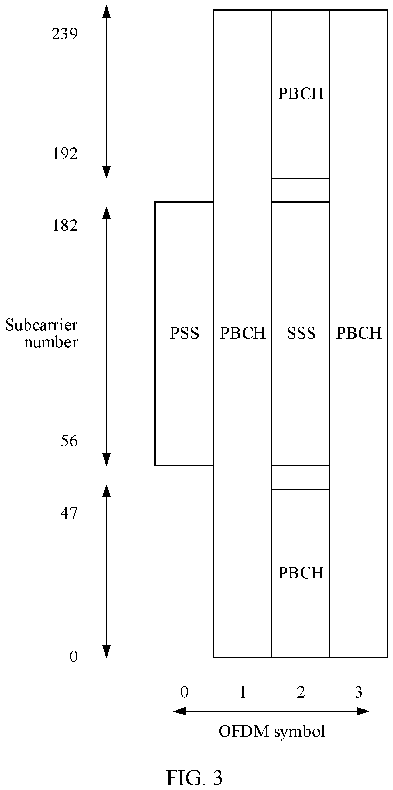

The SSB may include two parts: a synchronization signal (synchronization signal, SS) and a physical broadcast channel (physical broadcast channel, PBCH). The SS may include a primary synchronization signal (primary synchronization signal, PSS) and a secondary synchronization signal (secondary synchronization signal, SSS). Therefore, it may also be considered that the SSB includes three parts, in other words, the SSB includes the PSS, the SSS, and the PBCH. This is not limited. FIG. 3 is a diagram of an SSB in time domain and frequency domain.

In FIG. 3, the SSB may occupy four consecutive symbols in time domain, and may occupy 20 resource blocks (resource blocks, RBs), namely, 240 subcarriers (subcarriers, SCs), in frequency domain.

The SSB may be for implementing the following functions: (1) cell synchronization and master information block (master information block, MIB) obtaining; and (2) beam training on a network device side. The following provides a brief introduction.
(1) Cell synchronization and MIB obtaining: A PSS and an SSS in the SSB may carry a physical cell identifier (physical cell identifier, PCI), and a terminal device obtains the PCI by detecting the PSS and the SSS. In addition, a PBCH in the SSB may carry an SSB index (index). Each SSB index corresponds to a position at which the SSB is sent. Cell synchronization may be completed by detecting the SSB index and a moment at which the SSB is received. In addition, the PBCH in the SSB may carry a MIB. Therefore, the MIB may also be obtained based on the SSB.
(2) Beam training on a network device side: One SSB pattern (pattern) may include a plurality of SSB indexes, and different SSB indexes correspond to different transmission beams of a network device. The terminal device may select, by detecting the SSB, a transmission beam corresponding to an SSB with good quality, to complete beam training. In addition, the terminal device may also receive a same SSB by using a plurality of reception beams, to complete reception beam training on a terminal device side. For ease of description, an example in which the SSB with good quality is an SSB 1, and the SSB 1 corresponds to a transmission beam 1 of the network device is used for further description. Functions of the transmission beam 1 mainly include: (1) The terminal device receives, at a position corresponding to the SSB 1, a SIB 1 or paging (paging) sent by the network device through the transmission beam 1, to improve coverage of the SIB 1 or the paging; (2) the terminal device sends a physical random access channel (physical random access channel, PRACH) at the position corresponding to the SSB 1, and the network device may receive the PRACH by using a beam 1, to increase a probability of successful PRACH receiving; and (3) after the terminal device completes initial access and establishes a radio resource control (radio resource control, RRC) connection, the network device may perform finer-grained beam training based on the beam 1, to reduce overheads of fine beam training.

Before detecting the SSB, the terminal device usually cannot determine a specific time-frequency resource position of the SSB. In other words, the terminal device needs to perform blind SSB detection. In an implementation, a frequency domain interval, namely, a synchronization raster (synchronization raster), is predefined for blind SSB detection. The synchronization raster has different sizes in different frequency bands. A frequency domain position of the SSB may be defined by the synchronization raster, and the terminal device may perform SSB detection at an interval being the synchronization raster, to obtain information required for accessing a network.

### 3. System information block (system information block, SIB)

A system information element is broadcast through the system information block. System information elements of a same type are combined in system information. The system information in this application may be a SIB 1. A main function of the SIB 1 is to complete configuration on a primary cell (primary cell, PCell), so that a terminal device in an idle (idle) state monitors a paging message, or the terminal device completes uplink timing synchronization through random access, to enter a connected (connected) state.

The SIB 1 is usually carried on a physical downlink data channel (physical downlink shared channel, PDSCH). Generally, the network device may indicate, to the terminal device through downlink control information (downlink control information, DCI), a time-frequency position and a transmission parameter of the PDSCH carrying the SIB 1. A candidate time domain position and a candidate frequency domain position of the DCI may be indicated through a MIB. For example, the MIB includes a 4-bit (bit) control resource set 0 (control resource set zero, CORESET 0) and a 4-bit common search space 0 (common search space zero, CSS 0). The CORESET 0 indicates a candidate frequency domain position of DCI for scheduling the SIB 1, and the CSS 0 indicates a candidate time domain position of the DCI for scheduling the SIB 1. The network device may send, by using a beam that is the same as a beam for sending an SSB, a SIB 1 corresponding to the SSB. Correspondingly, when receiving the SIB 1, the terminal device may receive, by using a beam that is the same as a beam for receiving the SSB, the SIB 1 corresponding to the SSB. The SIB 1 corresponding to the SSB represents that a MIB in the SSB indicates a frequency domain position and a time domain position of DCI for scheduling the SIB 1.

In a possible understanding, the SIB 1 may be considered as remaining minimum system information (remaining minimum system information, RMSI), or the SIB 1 may be considered as a 1^{st} sent system message after the MIB, or the SIB 1 may be considered as a system message that includes time-frequency resource indication information of a random access channel (random access channel, RACH), or the SIB 1 may be considered as information carried on a PDSCH scheduled by using a physical downlink control channel (physical downlink control channel, PDCCH) determined based on the CORESET 0 and the CSS 0.

It may be understood that, the foregoing descriptions related to the SIB 1 and the SSB are merely examples for description, and do not limit the protection scope of embodiments of this application.

It may be further understood that, in embodiments of this application, the RACH and the PRACH are sometimes alternately used, and represent a same meaning without emphasizing a difference.

### 4. Common information

The common information may also be referred to as a common signal or non-dedicated information, and may be understood as information sent by one communication device to a plurality of communication devices. The communication system shown in FIG. 1 is used as an example. The common information may be understood as information sent by a network device to a plurality of terminal devices or one terminal device group in a cell, or may be understood as information not specifically sent by the network device to a terminal device or a terminal device group in a cell, or may be understood as information that can be jointly used by a plurality of terminal devices or one terminal device group in a cell. For example, the common information may be system information, a synchronization signal, or the like.

### 5. Random access (random access, RA)

A terminal device may perform random access via information included in a SIB 1.

For example, the following describes a possible random access manner, namely, four-step random access. The four-step random access is merely a name that represents a random access manner, and a specific name of the random access manner does not limit the scope of embodiments of this application. The four-step random access represents that four-step information exchange (Msg 1, Msg 2, Msg 3, and Msg 4) needs to be performed between the terminal device and a network device. A basic procedure of a four-step random access process is as follows.

Step 1: The terminal device sends a random access preamble (preamble), which may also be referred to as the Msg 1, to the network device. For example, the terminal device obtains random access configuration information. The random access configuration information includes a time-frequency resource (for example, denoted as a RACH time-frequency resource) used by the terminal device to send the random access preamble and a sequence used to send the random access preamble, and the terminal device sends the random access preamble to the network device on the time-frequency resource. A purpose of the random access preamble is to notify the network device that there is a random access request, so that the network device can estimate a transmission delay between the network device and the terminal device, to calibrate uplink timing (uplink timing).

For example, the network device may configure a plurality of RACH occasions (occasions). A specific RACH occasion to be selected by the terminal device, a specific preamble to be sent by the terminal device, and a specific transmission beam to be used by the terminal device may be determined based on a measurement result of an SSB index. In a possible implementation, there is a correspondence between the SSB index and {RACH occasion, preamble index}. If the terminal device determines an SSB, the terminal device may determine a corresponding RACH occasion and preamble index. The preamble index represents a sequence index of random access.

For example, the terminal device measures an SSB sent by the network device, for example, measures a signal received power (reference signal received power, RSRP) of the SSB. The terminal device may select an SSB index whose RSRP is greater than a preset threshold (where the preset threshold may be configured by a higher layer, or may be defined in a protocol), and determine, based on the correspondence between the SSB index and {RACH occasion, preamble index}, the RACH occasion and a preamble index set that correspond to the SSB index.

Step 2: The network device sends a random access response (random access response, RAR), which may also be referred to as the Msg 2, to the terminal device. Specifically, after detecting the random access preamble, the network device sends the Msg 2 to the terminal device.

Main functions of the RAR include: (1) sending an initial uplink transmission TA, to assist the terminal device in completing uplink timing synchronization; (2) sending a temporary cell radio network temporary identifier (temporary cell radio network temporary identifier, TC-RNTI) for use by the terminal device in place of a cell radio network temporary identifier (cell radio network temporary identifier, C-RNTI) before initial access is completed; and (3) sending an uplink grant (UL grant) (in other words, allocating an uplink resource), which is for scheduling one physical uplink shared channel (physical uplink shared channel, PUSCH) to send the subsequent Msg 3.

Step 3: The terminal device sends the Msg 3 to the network device. Specifically, after receiving the Msg 2, the terminal device first adjusts uplink timing based on a timing advance instruction, and sends, based on the Msg 2, an uplink message, which is also referred to as the Msg 3, on the uplink resource allocated via the Msg 2. If a plurality of terminal devices select the same random access preamble in step 1, a resource conflict occurs. For example, a random access preamble of one of the plurality of terminal devices is correctly received by the network device, the network device sends the Msg 2 to the terminal device, and the plurality of terminal devices each can receive the Msg

2. The plurality of terminal devices cannot determine, through the Msg 2, a specific terminal device whose random access preamble is received by the network device. In this case, these terminal devices each may receive the Msg 2 and separately send the Msg 3. Therefore, the Msg 3 includes a unique identifier of the terminal device, and is for resolving the resource conflict.

Step 4: The network device sends a conflict resolution to the terminal device. Specifically, the network device receives the Msg 3 of the terminal device, and returns the conflict resolution message, which may also be referred to as the Msg 4, to the terminal device that successfully accesses the network device. The network device carries, in the conflict resolution message, the unique identifier in the Msg 3, to specify the terminal device that successfully accesses the network device, and another terminal device that fails to access the network device re-initiates random access.

It may be understood that, the foregoing specific procedure related to the random access is an example for description, and does not limit the protection scope of embodiments of this application.

### 6. Timing advance

A network device may configure a time-frequency resource used by a terminal device to send or receive a signal. To determine a signal sending or receiving time point, the terminal device needs to perform timing synchronization by using a downlink signal, to match a time boundary of the network device. Generally, a downlink reference signal may be for performing timing synchronization, and the reference signal for performing timing synchronization may be referred to as a timing anchor. The downlink reference signal may be an SSB, a cell reference signal (cell reference signal, CRS), or the like.

A downlink timing anchor may also be for determining timing of uplink transmission. After determining a boundary of a downlink subframe through a downlink timing signal, the terminal device may send an uplink signal based on a same time reference system. To implement uplink reception alignment at a receive end, the network device may configure one TA for each terminal device, and the terminal device sends the uplink signal in advance based on the TA on a basis of downlink timing synchronization. In this way, a time point at which the uplink signal sent by the terminal device arrives at the network device may be aligned with uplink reception timing of the network device.

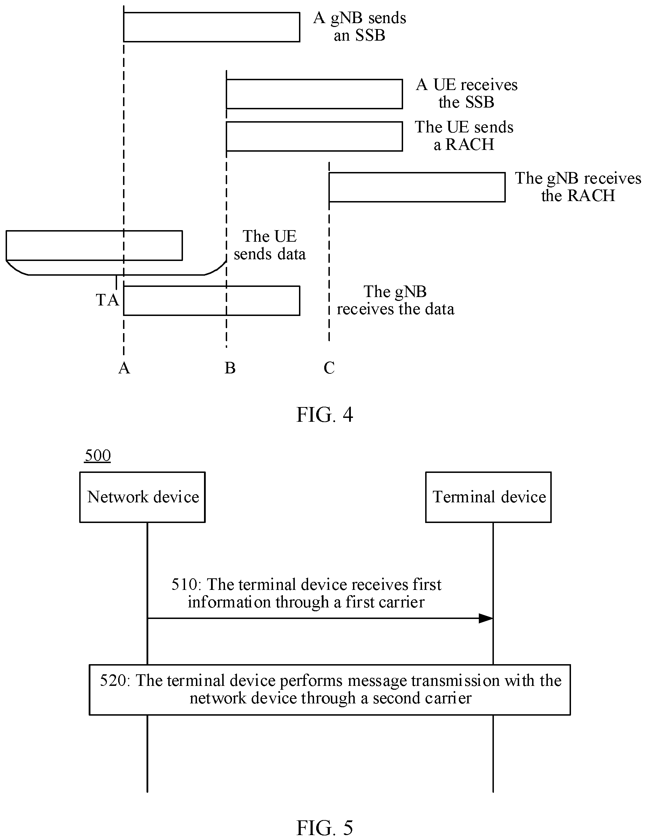

FIG. 4 is a diagram of a TA.

As shown in FIG. 4, for a gNB, a frame boundary is at a moment A. Therefore, the gNB sends an SSB by using the moment A as a reference point. The moment A may also be understood as a start point for sending the SSB. A frame boundary obtained by a UE performing timing synchronization based on the received SSB is a point B, and therefore, the UE sends a RACH by using a moment B as a reference point. The moment B may also be understood as a start point for sending the RACH. Considering a delay caused by path transmission and the like, the gNB receives the RACH by using a moment C as a reference point. The moment C may also be understood as a moment at which the base station receives the RACH. Distances from different UEs to the gNB are different, and speeds at which signals are transmitted via electromagnetic waves are basically consistent. In this way, reference points at which the gNB receives RACHs of the different terminal devices may be different. The foregoing case can be avoided through the TA. For example, the gNB may configure different TAs for the different UEs. In this way, data sent by all the UEs can arrive at the network device at a same moment (for example, the moment A in FIG. 4).

### 7. Carrier

In this application, the carrier may be understood as a frequency domain range, a bandwidth area, or a frequency domain unit. The frequency domain unit may be understood as a measurement unit of a resource occupied, in frequency domain, by a resource that is used for information.

A first carrier and a second carrier in this application may also be understood as a first frequency domain range and a second frequency domain range. For ease of description, the following uses the first carrier and the second carrier as examples for detailed description.

The first carrier may also be referred to as a base carrier. For example, when the terminal device is in an idle state or an inactive (inactive) state, the terminal device may receive, through the first carrier, common information sent by the network device. In this case, the first carrier may also be understood as a common carrier. The network device always needs to periodically or frequently send a common signal on the first carrier, so that the terminal device identifies the network device, and obtains carrier information and/or common information required by the terminal device to access a network.

For another example, compared with the second carrier, the first carrier meets at least one of the following: low power consumption, a low rate, and a low bandwidth.

The second carrier may also be referred to as an energy-saving carrier. For example, compared with the first carrier, the second carrier meets at least one of the following: high power consumption, a high rate, and a high bandwidth. For example, if the terminal device has a requirement to perform information transmission through the second carrier, that is, when the terminal device performs information transmission with the network device through the second carrier, the network device performs information transmission on the second carrier. For another example, if the terminal device has a requirement to perform access through the second carrier, that is, when the terminal device is to access the network device through the second carrier, the network device sends the common signal on the second carrier. The common signal may be used by the terminal device to access the network device through the second carrier.

The first carrier and the second carrier may be carriers with a same frequency sent by two network devices. For example, the first carrier represents a cell 1 under a base station, and the second carrier is a cell 2 under another base station. Alternatively, the first carrier and the second carrier may be two carriers with different frequencies sent by one network device. For example, the first carrier and the second carrier represent two cells under a same base station. This is not limited.

The following describes several optional cases of the first carrier and the second carrier with reference to an internal structure of the terminal device.

Case 1: The terminal device includes a first module and a second module. Power consumption of the first module is less than power consumption of the second module. In this case, the first carrier may represent a carrier used by the terminal device to perform signal transmission by using the first module, and the second carrier may represent a carrier used by the terminal device to perform signal transmission by using the second module.

Case 2: The terminal device may work on a first link, or may work on a second link. In other words, the terminal device may perform signal transmission on the first link, or may perform signal transmission on the second link. In other words, the terminal device and the network device may communicate with each other by using the first link, or may communicate with each other by using the second link. In this case, the first carrier may represent a carrier used by the terminal device to perform signal transmission on the first link, and the second carrier may represent a carrier used by the terminal device to perform signal transmission on the second link. It may be understood that, a link represents a connection relationship between the terminal device and the network device, and is a logical concept rather than a physical entity.

Case 3: Power consumption or communication capabilities of the terminal device in different states may be different. For example, power consumption or communication capabilities of the terminal device may be different when the terminal device is in different radio resource control (radio resource control, RRC) states. A first state (state) and a second state are used as an example. Power consumption of the terminal device when the terminal device is in the first state may be less than power consumption of the terminal device when the terminal device is in the second state. The first state may be, for example, an idle state or an inactive state, and the second state may be, for example, a connected (connected) state. In this case, the first carrier may represent a carrier used by the terminal device to perform signal transmission when the terminal device is in the first state, and the second carrier may represent a carrier used by the terminal device to perform signal transmission when the terminal device is in the second state.

The foregoing describes the first carrier and the second carrier from different perspectives. It may be understood that, the foregoing example description for ease of understanding does not limit the protection scope of embodiments of this application. The first carrier and the second carrier are not strictly limited in embodiments of this application, and any two different carriers are applicable to embodiments of this application. It may be further understood that, in embodiments of this application, the method provided in embodiments of this application is described in detail by mainly using the carrier as an example. However, this should not constitute any limitation on this application. For example, the carrier in embodiments of this application may also be replaced with any one of the following: a subcarrier, a physical resource block (physical resource block, PRB), a resource block group (resource block group, RBG), a subband (subband), a bandwidth part (bandwidth part, BWP), or the like.

In the following embodiments, performing signal transmission on the first carrier and performing signal transmission through the first carrier are sometimes alternately used, and represent a same meaning. Performing signal transmission on the second carrier and performing signal transmission through the second carrier are sometimes alternately used, and represent a same meaning.

The foregoing briefly describes terms used in this application, and details are not described in the following embodiments. In addition, the foregoing descriptions of terms are merely descriptions for ease of understanding, and do not limit the protection scope of embodiments of this application.

Based on the foregoing descriptions of the first carrier and the second carrier, the following describes a transmission manner of a current common signal.

The network device periodically sends the common signal on the first carrier. Correspondingly, the network device also periodically sends the common signal on the second carrier. An example in which the common signals are an SSB and a SIB 1 is used. Before accessing the network device, the terminal device needs to first detect the SSB and the SIB 1. The network device periodically sends the SSB and the SIB 1 on both the first carrier and the second carrier, so that the terminal device identifies the network device.

For the SSB, at a candidate frequency domain position of the SSB, the terminal device detects the SSB at a periodicity of 20 ms. When detection duration exceeds 20 ms, and the SSB is not detected by the terminal device, the terminal device may consider that the network device does not send the SSB at the candidate frequency domain position. Therefore, the terminal device may adjust to another candidate frequency domain position to continue to detect the SSB.

For the SIB 1, the SIB 1 includes information required for random access, for example, a time-frequency resource used by the terminal device in a random access process. Therefore, even if the terminal device detects the SSB, if the SIB 1 is not received by the terminal device, the terminal device cannot perform random access, and needs to continue to wait until the SIB 1 is received. If a periodicity in which the network device sends the SIB 1 is excessively long, a delay in accessing the network device by the terminal device may be excessively long, which affects experience of the terminal device. Therefore, the periodicity in which the network device sends the SIB 1 is short, and caused power overheads are also large.

In conclusion, to improve the experience of the terminal device as much as possible, the network device needs to periodically send the SSB and the SIB 1 on each carrier. In this way, a problem occurs. Even if the terminal device does not have a requirement to perform data transmission on some carriers, the network device still needs to send the SSB and the SIB 1 on these carriers. Consequently, energy consumption of the network device is increased.

In view of this, this application proposes a method, so that overheads for sending the common information can be reduced through assistance between carriers. This reduces energy consumption of the network device without affecting the experience of the terminal device.

In a solution, the network device may send, to the terminal device through the first carrier, some common information required when the terminal device accesses the network device through the second carrier. In this way, signaling overheads caused by transmitting the common information on the second carrier can be reduced, and energy consumption overheads caused by frequently transmitting the information on the second carrier can be reduced.

In another solution, after receiving indication information indicating that the terminal device has a requirement to perform data transmission through the second carrier, the network device transmitting the common information on the second carrier. In this way, signaling overheads caused by transmitting the common information by the network device on the second carrier can be reduced, and energy consumption overheads caused by transmitting the common information by the network device as a whole can be reduced. The foregoing briefly describes terms used in this application, and details are not described in the following embodiments.

It may be understood that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects.

The following describes in detail a method provided in embodiments of this application with reference to the accompanying drawings. Embodiments provided in this application may be applied to the system shown in FIG. 1 or FIG. 2. This is not limited.

FIG. 5 is a diagram of an information transmission method 500 according to an embodiment of this application. The method 500 may include the following steps.

510: A terminal device receives first information from a network device through a first carrier. Correspondingly, the network device sends the first information through the first carrier.

The first information may include information required when the terminal device accesses the network device through a second carrier. For example, the first information includes at least one of the following: resource information used by the terminal device to access the network device through the second carrier, partial information or all information in first common information, and resource information for transmitting second common information through the second carrier. The following separately describes content that may be included in the first information.

Resource information used by the terminal device to access the network device through the second carrier: For ease of description, a resource used by the terminal device to access the network device through the second carrier is referred to as a resource #A for short. That is, the first information includes information about the resource #A. The resource in this application may also be understood as a time-frequency resource.

In a possible manner, information sent by the terminal device through the resource #A is for initial access, timing synchronization, or carrier wake-up. For example, the resource #A may be a RACH resource, and the terminal device may send a random access preamble to the network device on the resource #A, where the random access preamble is for initial access. If the terminal device receives the information about the resource #A on the first carrier, the terminal device may directly perform initial access by using the resource #A. This reduces signaling overheads caused by transmitting the information about the resource #A on the second carrier.

The first common information is used by the terminal device to access the network device through the second carrier, or the first common information may be used by the terminal device to perform cell search synchronization through the second carrier. For example, the first common information may be used to complete configuration on a cell, so that a terminal device in an idle state monitors a paging message, or a terminal device in an idle state completes uplink timing synchronization through random access, to enter a connected state. If the terminal device receives the first common information on the first carrier, the first common information may be used by the terminal device to access the network device through the second carrier. In this way, the terminal device can directly access a network based on the first common information. This reduces signaling overheads caused by transmitting the first common information on the second carrier.

For example, the first common information may include, for example, at least one of the following: system information and area identification information. The system information may include, for example, a SIB 1 and/or a MIB. For example, the terminal device may receive partial information or all information in the SIB 1 through the first carrier. For example, the partial information in the SIB 1 includes one or more of the following: common configuration information of a serving cell, configuration information of a timer or a counter of the terminal device, and configuration information of unified access control (unified access control, UAC). The area identification information represents information that can identify an area, in other words, the terminal device may learn of the information about the area based on the area identification information. For example, the area identification information may include one or more of the following: a tracking area identifier, a RAN area identifier, and a cell identity.

Optionally, the network device sends the first common information on the first carrier, and does not send the first common information on the second carrier. For example, the first common information is the SIB 1, and the terminal device receives the SIB 1 on the first carrier. If the terminal device is to access the network device through the second carrier, the terminal device accesses, through the second carrier, the network device based on the SIB 1 received on the first carrier and information included in the SIB 1.

Optionally, the network device may send the first common information on both the first carrier and the second carrier. In this case, optionally, a transmission periodicity in which the network device sends the common information on the second carrier may be long, for example, 40 ms. For example, the first common information is the SIB 1, and the terminal device receives the SIB 1 on the first carrier. If the terminal device is to access the network device through the second carrier, because a periodicity in which the network device sends a first common signal on the second carrier is long, if the terminal device performs blind detection for the first common information on the second carrier, a delay is long. Therefore, the terminal device may access, through the second carrier, the network device based on the SIB 1 received on the first carrier and the information included in the SIB 1. In this way, the delay in detecting the first common information by the terminal device can be reduced, and system performance can be improved.

The second common information may be used by the terminal device to implement at least one of the following functions: downlink synchronization, cell search, beam training, and the like.

For example, the second common information is an SSB. The terminal device may receive, through the first carrier, resource information for transmitting the SSB. Further, the terminal device receives the SSB on the second carrier based on the resource information, to complete downlink synchronization, cell search, and/or beam training.

For another example, the second common information is a tracking reference signal (tracking reference signal, TRS). The terminal device may receive, through the first carrier, resource information for transmitting the TRS. Based on the resource information, the terminal device may receive the TRS on the second carrier, and complete downlink synchronization, cell search, and/or beam training based on the TRS.

Optionally, the second common information may be transmitted on both the first carrier and the second carrier. Further, optionally, the second common information on the first carrier is second common information to be transmitted on the second carrier. An example in which the second common information is the SSB is used. For example, if the terminal device is to access the network device through the second carrier, the network device may first send the SSB on the first carrier. Correspondingly, the terminal device receives the SSB on the first carrier, and an SSB used when the terminal device accesses the network device through the second carrier may be the SSB received on the first carrier. According to this solution, when a transmission periodicity of the second common information transmitted on the second carrier is long, the terminal device may receive, through the first carrier, the second common information that is originally to be transmitted on the second carrier. In this way, a waiting delay in receiving the second common information by the terminal device can be reduced, and system performance can be improved.

Resource information for transmitting the second common information through the second carrier: For example, the resource information for transmitting the second common information through the second carrier may include a time-frequency resource used by the terminal device to receive the second common information through the second carrier. If the terminal device receives, on the first carrier, the resource information for transmitting the second common information through the second carrier, when receiving the second common information on the second carrier, the terminal device may directly receive the second common information by using the resource information. This reduces signaling overheads caused by transmitting the resource information on the second carrier.

The foregoing separately describes each piece of information, and the following describes the first common information and the second common information in combination.

The first common information and the second common information may be used by the terminal device to access the network device through the second carrier.

For example, a union set of the first common information and the second common information includes common information used by the terminal device to access the network device through the second carrier. In other words, the terminal device may access the network device via the first common information and the second common information. For example, the terminal device may obtain the cell identity by via the second common information, to complete downlink timing synchronization; and the terminal device performs random access via the partial information or all the information in the first common information. For example, the second common information is a synchronization signal, and the first common information is information other than the synchronization signal in the information used by the terminal device to access the network device.

For another example, there may be an intersection set between the first common information and the second common information. In other words, partial information in the first common information is the same as that of the second common information.

The foregoing descriptions of the first common information and the second common information are examples for description, and this is not limited.

In a possible form, the first common information is the SIB 1, and the second common information is the SSB. In this way, the terminal device may obtain the cell identity via the SSB, to complete downlink timing synchronization, and obtain the MIB. The terminal device may learn of, via the MIB, a potential time-frequency position of DCI for scheduling the SIB 1. The network device may schedule a PDSCH by using the DCI, where the PDSCH carries the SIB 1. Correspondingly, the terminal device performs blind DCI detection at the potential time-frequency position. If the terminal device detects the DCI, the terminal device may receive the PDSCH on a time-frequency resource specified by the DCI, to obtain the SIB 1 carried on the PDSCH. The terminal device performs random access via the information included in the SIB 1.

It may be understood that, the foregoing description of content included in the first information is an example for description. This is not limited in embodiments of this application. Optionally, the first information may further include at least one of the following: the second common information, a time window, and a frequency domain position of the second carrier. The time window is an effective time range in which the terminal device detects a signal sent by the network device through the second carrier. The frequency domain position of the second carrier represents a frequency domain range of the second carrier.

520: The terminal device performs message transmission with the network device through the second carrier.

A message transmitted by the terminal device to the network device through the second carrier in step 520 may be a message required when the terminal device accesses the network device through the second carrier. Correspondingly, that the terminal device performs message transmission with the network device through the second carrier may also be understood as that the terminal device accesses the network device through the second carrier. Specifically, the terminal device may access the network device through the second carrier based on the first information and the second common information.

Based on this embodiment of this application, the network device may send, to the terminal device through the first carrier, some common information required when the terminal device accesses the network device through the second carrier. In this way, signaling overheads caused when the network device transmits the common information on the second carrier can be reduced, and energy consumption overheads caused when the network device transmits the common information as a whole can be reduced.

In step 520, that the terminal device performs message transmission with the network device through the second carrier may also be understood as that the terminal device accesses the network device through the second carrier, or the terminal device performs message transmission with the network device through the second carrier, to access the network device. The following describes several solutions in which the terminal device accesses the network device through the second carrier.

Solution 1: The terminal device sends a first message on the first carrier.

Based on Solution 1, the method 500 further includes: The terminal device sends the first message on the first carrier. The first message indicates that the terminal device is to access the network device through the second carrier, or the first message is for triggering the terminal device to access the network device through the second carrier, or the first message is for notifying the network device that the terminal device needs to access a network through the second carrier. For example, the first message is a Msg 1 or a preamble in a random access process.

Optionally, the first message is determined based on the first information.

Case 1: A time-frequency resource and/or a sequence of the first message are/is determined based on the first information. For example, the first information includes information about a resource #A, the first message is the Msg 1 or the preamble in the random access process, and a time-frequency resource used by the Msg 1 may be determined based on the resource #A. For another example, the first information includes the second common information, and the terminal device selects a corresponding preamble based on a measurement result of the second common information, and sends the preamble. The second common information may be, for example, the SSB. For details, refer to related descriptions of random access in the foregoing term explanation part. Details are not described herein again.

Case 2: The first information further indicates to transmit the first message on the first carrier. For example, the first information includes indication information, and the indication information indicates the terminal device to send the first message on the first carrier. There are many forms of the indication information, and this is not limited. For example, the indication information may be a SIB 1. Specifically, the network device sends the SIB 1 on the first carrier. After the terminal device receives the SIB 1 on the first carrier, the terminal device determines to send the first message on the first carrier. For another example, it is predefined that if the terminal device receives the first information through the first carrier, the terminal device is to send the first message on the first carrier. Specifically, if the terminal device receives the first information from the network device through the first carrier, the terminal device determines to send the first message on the first carrier. In this case, it may be understood as that it is predefined that the terminal device receives the first information on the first carrier, in other words, sends the first message on the first carrier, or it is understood as that it is predefined that the terminal device sends the first message on the first carrier.

The first message indicates that the terminal device is to access the network device through the second carrier. The following lists several possible forms of the first message.

Form 1: A resource of the first message may indicate, to the network device, that the terminal device is to access the network device through the second carrier. In other words, the first message implicitly indicates that the terminal device is to access the network device through the second carrier. For example, if the terminal device sends the first message to the network device on the first carrier by using a resource #1, it indicates that the terminal device is to access the network device through the first carrier; or if the terminal device sends the first message to the network device on the first carrier by using a resource #2, it indicates that the terminal device is to access the network device through the second carrier. Correspondingly, if the network device receives the first message on the resource #1, the network device learns that the terminal device is to perform access through the first carrier; or if the network device receives the first message on the resource #2, the network device learns that the terminal device is to perform access through the second carrier. To implement that the terminal device accesses the network device through the second carrier in Solution 1, in Solution 1, the terminal device sends the first message on the first carrier, where the resource of the first message is the resource #2, and the first message indicates that the terminal device is to access the network device through the second carrier.

Form 2: The first message includes information indicating that the terminal device is to access the network device through the second carrier, namely, information that indicates that the terminal device is to access the network device through the second carrier and that is displayed in the first message. For example, the first message includes an indication field, the indication field indicates that the terminal device is to access the network device through the second carrier, and the indication field may be implemented via one or more bits. For example, one bit indicates whether the terminal device is to access the network device through the second carrier. For example, if the bit is set to "1", it indicates that the terminal device is to access the network device through the second carrier. Further, optionally, different status values of the one or more bits in the indication field indicate whether the network device is to access the network device through or not through the second carrier. Still, one bit is used as an example. If the bit is set to "1", it indicates that the terminal device is to access the network device through the second carrier. If the bit is set to "0", it indicates that the terminal device is to access the network device not through the second carrier, or it indicates that the terminal device is to access the network device through the first carrier.

Form 3: A sequence of the first message may indicate, to the network device, that the terminal device is to access the network device through the second carrier. In other words, when sequences of the first message are different, the different sequences may respectively indicate whether the terminal device is to access the network device through or not through the second carrier. For example, if the sequence of the first message sent by the terminal device to the network device is a first sequence, it indicates that the terminal device is to access the network device through the first carrier; or if the sequence of the first message sent by the terminal device to the network device is a second sequence, it indicates that the terminal device is to access the network device through the second carrier. Correspondingly, if the sequence of the first message received by the network device is the first sequence, the network device learns that the terminal device is to perform access through the first carrier; or if the sequence of the first message received by the network device is the second sequence, the network device learns that the terminal device is to perform access through the second carrier. In Solution 1, the terminal device sends the first message on the first carrier, and the sequence of the first message is the second sequence. Therefore, the first message indicates that the terminal device is to access the network device through the second carrier.

If the network device learns, based on the first message, that the terminal device is to perform access through the second carrier, the network device may send second information to the terminal device on the second carrier. It may be understood that, the first message may be further understood as being for triggering the network device to send the second information on the second carrier.

Based on Solution 1, optionally, the method 500 further includes: The terminal device receives the second information from the network device on the second carrier.

The second information may be used by the terminal device to perform initial access or perform an operation related to initial access. For example, the second information may be used by the terminal device to perform at least one of the following: transmitting a message related to initial access, uplink synchronization, downlink synchronization, carrier wake-up, and the like. In this way, the network device may send the second information to the terminal device on the second carrier after receiving the trigger of the terminal device, that is, after the terminal device sends the first message to the network device. This can reduce power consumption caused by frequent transmission of the second information on the second carrier.

In a possible case, the second information may be a PSS and an SSS.

In another possible case, the second information includes at least one of the following: the first common information, a response message of the first message, downlink control information for scheduling the response message of the first message, or downlink control information for scheduling the second common information. Further, optionally, the second information includes the second common information. In this case, the second information may not include the downlink control information for scheduling the second common information. The second common information included in the second information may be, for example, a synchronization signal, and the synchronization signal may be used by the terminal device to perform downlink synchronization. For example, the second common information may be the SSB.

The response message of the first message, or referred to as an answer signal answering the first message, may be, for example, a RAR or a Msg 2. For a function of the RAR, refer to related descriptions of random access in the foregoing term explanation part. Details are not described herein again.

The downlink control information for scheduling the response message of the first message may be, for example, DCI corresponding to the RAR.

The first common information included in the second information may include the complete first common information. Alternatively, if the first information in step 510 includes the partial information in the first common information, the second information includes information other than the partial information. For example, the first common information is the SIB 1. Assuming that the first information includes partial information in the SIB 1 on the second carrier, a SIB 1 in the second information may include remaining information other than the partial information, or may include all information in the SIB 1. If the second information includes the first common information, and based on Solution 1, the network device learns, based on the first message, that the terminal device is to perform access through the second carrier, the network device may send the first common information to the terminal device on the second carrier. In this way, the network device does not need to always periodically send the first common information on the second carrier, but sends the first common information on the second carrier based on the trigger of the terminal device, so that signaling overheads for sending the first common information by the network device can be reduced, and overall power consumption of the network device can be reduced.

Optionally, the information included in the second information is sent as a whole. An example in which the second information includes the response message of the first message and the second common information, the second common information is the synchronization signal, and the response message of the first message is the RAR is used. For example, the synchronization signal and the RAR may be used as one block (block) for transmission. For another example, the synchronization signal and the DCI corresponding to the RAR may be used as one block for transmission. For details, refer to a case in which an SS and a PBCH jointly form an SSB in the conventional technology. This is not limited. For example, that the information included in the second information is sent as a whole may be further understood as that the information included in the second information is simultaneously sent or is simultaneously not sent. Further, when the information included in the second information is simultaneously sent, different information may be independently encoded, or may be jointly encoded. This is not limited.

Optionally, if the first information includes the time window, the terminal device may detect the second information in the time window. If the terminal device detects the second information in the time window, the terminal device may directly use the second information. If the terminal device detects no second information in the time window, the terminal device may send the first message to the network device on the first carrier, to trigger the network device to send the second information. For a trigger function and a trigger form of the first message, refer to the first message. Details are not described herein again. In this manner, an excessively long delay caused by a case in which the terminal device keeps waiting to detect the second information can be avoided, to improve experience of the terminal device.

Optionally, the terminal device performs beam training based on the second information. For example, if there are a plurality of pieces of second information, the terminal device may complete the beam information by using the plurality of pieces of second information. For example, refer to the manner in which the terminal device completes the beam training by using the SSB in the term explanation part. For another example, if there is one piece of second information, the terminal device may receive the second information by using a beam that is the same as a beam for sending the first message. In other words, the beam used by the terminal device to receive the second information is the same as the beam used by the terminal device to send the first message.

The random access manner described in the foregoing term part is used as an example. Based on Solution 1, after the terminal device receives the second information, assuming that the second information includes the RAR, and the RAR includes a time-frequency resource of a PUSCH that carries a Msg 3, the terminal device may send the Msg 3 on the second carrier based on the second information. Further, optionally, the terminal device receives a Msg 4 on the second carrier.

Based on the foregoing Solution 1, the network device may send the second information to the terminal device on the second carrier after receiving the trigger of the terminal device, that is, after the terminal device sends the first message to the network device.

Solution 2: The terminal device sends a second message on the second carrier.

Based on Solution 2, the method 500 further includes: The terminal device sends the second message on the second carrier. The second message is used by the terminal device to access the network device. Further, optionally, the second message is a random access request used when the terminal device accesses the network device through the second carrier. For example, the second message is a Msg 1 or a preamble in a random access process.

In a possible implementation, a time-frequency resource and/or a sequence used by the second message are/is determined based on the first information. For example, the first information includes the information about the resource #A, the second message is the Msg 1 in the random access process, and the time-frequency resource used by the Msg 1 may be determined based on the information about the resource #A. For another example, the first information includes the second common information, and the second common information is the SSB. The second message is the Msg 1 in the random access process. The terminal device selects a corresponding preamble based on a measurement result of the SSB, and sends the preamble.

In another possible manner, a time-frequency resource and/or a sequence of the second message are/is determined via an SSB detected by the terminal device on the first carrier. For example, before step 520, the method 500 further includes: The terminal device receives, on the first carrier, an SSB sent by the network device. The terminal device may determine the second message based on the SSB received on the first carrier.

Further, optionally, the method 500 further includes: The terminal device receives the second common information from the network device on the second carrier, and sends the second message on the second carrier based on the second common information and the first information. The second common information is, for example, the synchronization signal, and the second common information may be used by the terminal device to perform downlink synchronization. For example, the second common information may be the SSB or the TRS.

Optionally, before the terminal device receives, on the second carrier, the second common information sent by the network device, the method 500 further includes: The terminal device sends the first message on the first carrier, and correspondingly, the network device receives the first message. In this way, the network device may learn, based on the first message, that the terminal device is to perform access through the second carrier. Therefore, the network device may send the synchronization signal to the network device on the second carrier. For the first message, refer to the description in Solution 1. Details are not described herein again.

Optionally, that the terminal device sends the second message based on the second common information on the second carrier and the first information on the first carrier includes: The terminal device completes downlink timing synchronization based on the second common information on the second carrier; and after completing the downlink timing synchronization, the terminal device sends the second message on the second carrier based on the first information. For example, the first information includes the information about the resource #A. The terminal device determines, based on the information about the resource #A included in the first information, a resource for sending the second message, and further sends the second message by using the resource. For another example, the terminal device sends the second message based on partial information or all information that is in a SIB 1 transmitted on the second carrier and that is included in first information.

Optionally, the method 500 further includes: The terminal device detects third common information on the second carrier, where the third common information includes the first common information. The third common information may include all the information in the first common information, namely, the complete first common information. Alternatively, if the first information in step 510 includes the partial information in the first common information, the third common information includes information other than the partial information. For example, the first common information is the SIB 1. Assuming that the first information includes partial information in the SIB 1 on the second carrier, a SIB 1 in the third common information may include remaining information other than the partial information, or may include all the information in the SIB 1.

For example, after receiving, on the second carrier, the second common information sent by the network device, the terminal device detects, on the second carrier, the third common information sent by the network device; and the terminal device sends the second message based on the second common information on the second carrier, the first information on the first carrier, and the third common information.

It should be noted that, a sequence in which the terminal device detects the third common information on the second carrier and sends the second message on the second carrier may not be specifically limited.

Optionally, after sending the second message on the second carrier, the terminal device may detect a response message of the second message, for example, a RAR, in a specified time domain window. For details, refer to a related solution of the random access process. This is not limited.

Based on Solution 2, after receiving the first message of the terminal device, the network device may send the second common information to the terminal device on the second carrier. In this way, the second common information does not need to be frequently transmitted on the second carrier. This reduces signaling overheads of the second common information on the second carrier, and reduces energy consumption overheads caused by frequent transmission of the second common information on the second carrier. In addition, the first common information may also be transmitted on the first carrier, or the third common information transmitted on the second carrier may include the partial information in the first common information. In this way, the first common information or the partial information in the first common information transmitted on the second carrier does not need to be frequently transmitted on the second carrier. This reduces signaling overheads of the first common information on the second carrier, and further reduces energy consumption overheads caused by frequent transmission of the first common information on the second carrier.

It may be understood that, the foregoing two solutions are examples for description, and embodiments of this application are not limited thereto. Any variation of the foregoing two solutions is applicable to embodiments of this application.

It may be further understood that, in the foregoing two solutions, the terminal device may not send the Msg 3. For example, in the foregoing solutions, after completing timing synchronization on the second carrier, the terminal device does not send the Msg 3, and initiates random access on the second carrier when the terminal device needs to transmit service data. Because the terminal device has completed the timing synchronization, time spent on performing timing synchronization in the random access process can be reduced.

Optionally, the method 500 further includes: The terminal device receives a signal on the first carrier, and correspondingly, the network device sends the signal on the first carrier. The signal may be used by the terminal device to learn of a position of the first carrier, to subsequently receive the first information based on the first carrier. For example, the signal may be, for example, the SSB and/or the SIB 1. It may be understood that, the SSB and the SIB 1 are examples for description, and the network device may also send another signal on the first carrier. This is not limited.

It is assumed that the foregoing signal is the SIB 1. To be specific, the network device sends the SIB 1 on the first carrier. Correspondingly, the terminal device receives the SIB 1 on the first carrier. Optionally, the SIB 1 on the first carrier and the first information in step 510 may be carried on the same PDSCH.

It is assumed that the foregoing signal is the SSB. To be specific, the network device sends the SSB on the first carrier. Correspondingly, the terminal device receives the SSB on the first carrier. In a possible implementation, the terminal device may determine, based on a power for the received SSB, for example, an RSRP of the SSB, whether to access the network device through the first carrier or the second carrier. For example, if the power of the SSB received by the terminal device on the first carrier is greater than a threshold, the terminal device accesses the network device through the first carrier; or if the power of the SSB received by the terminal device on the first carrier is less than a threshold, the terminal device accesses the network device through the second carrier. For example, the threshold may be, for example, predefined, for example, predefined in a standard; or the threshold may be preconfigured by the network device; or the terminal device receives the SIB 1 on the first carrier, where the SIB 1 includes the threshold.

For example, assuming that a resource of the first message is a resource #1 or a resource #2, the terminal device may determine, based on the SSB received on the first carrier, whether to send the first message by using the resource #1 or the resource #2. For example, if the power of the SSB received by the terminal device on the first carrier is greater than the threshold, the terminal device sends the first message to the network device on the first carrier by using the resource #1, where the resource #1 represents that the terminal device accesses the network device through the first carrier; or if the power of the SSB received by the terminal device on the first carrier is less than the threshold, the terminal device sends the first message to the network device on the first carrier by using the resource #2, where the resource #2 represents that the terminal device accesses the network device through the second carrier.

Optionally, that the terminal device performs message transmission with the network device through the second carrier in step 520 includes: The terminal device receives the first common information and/or the second common information through the second carrier.

For example, the first information includes resource information for transmitting the second common information through the second carrier. The terminal device learns, based on the resource information that is for transmitting the second common information through the second carrier and that is included in the first information, of a resource for receiving the second common information, and may further receive the second common information by using the resource.

For another example, the first information includes the partial information in the first common information, and the terminal device receives remaining partial information in the first common information on the second carrier.

The following describes several possible cases in which the SIB 1 and the SSB are transmitted on the second carrier by using an example in which the first common information is the SIB 1 and the second common information is the SSB.

Optionally, the SSB and the SIB 1 on the second carrier include the following several cases.

Case 1: The network device sends the SSB and the SIB 1 on the second carrier.

Based on this case, the network device may periodically send the SSB and the SIB 1, and a periodicity of the SSB and a periodicity of the SIB 1 may be greater than 20 ms, for example, the periodicity may be 80 ms or 160 ms. In this way, the periodicity of the SSB and the periodicity of the SIB 1 are long, so that signaling overheads caused when the network device sends the SSB and the SIB 1 on the second carrier can be effectively reduced. In addition, based on the solutions in this embodiment of this application, for example, Solution 1 or Solution 2 described above, although the periodicity of the SSB and the periodicity of the SIB 1 are long, due to assistance of the first carrier, a delay caused when the terminal device accesses the network device is not increased.

Case 2: The network device sends the SSB on the second carrier.

Based on this case, the network device may periodically send the SSB, and a periodicity of the SSB may be greater than 20 ms, for example, the periodicity may be 80 ms or 160 ms. In this way, the periodicity of the SSB is long, and the SIB 1 may not be periodically transmitted on the second carrier. This can effectively reduce signaling overheads on the second carrier. In addition, based on the solutions in this embodiment of this application, for example, Solution 1 or Solution 2 described above, although the periodicity of the SSB is long, due to assistance of the first carrier, where for example, the first information transmitted on the first carrier includes the partial information or all the information in the SIB 1 transmitted on the second carrier, the terminal device can perform initial access, and a delay caused when the terminal device accesses the network device is not increased.

It may be understood that, in Case 2, the network device may not need to periodically send the SIB 1 on the second carrier. However, it does not mean, as a limitation, that the network device cannot send the SIB 1 on the second carrier in embodiments of this application. For example, after the network device receives the trigger of the terminal device, for example, the first message in Solution 1, the network device may send the second information on the second carrier, and the second information may include the SIB 1.

Case 3: The network device does not periodically send the SSB and the SIB 1 on the second carrier.

It may be understood that, in Case 3, the network device may not need to periodically send the SSB and the SIB 1 on the second carrier. However, it does not mean, as a limitation, that the network device cannot send the SSB and the SIB 1 on the second carrier in embodiments of this application. For example, after the network device receives the trigger of the terminal device, for example, the first message in Solution 1, the network device may send the SSB and the SIB 1 on the second carrier.

Based on this case, signaling overheads on the second carrier can be effectively reduced. In addition, based on the solution in embodiments of this application, for example, Solution 1 or Solution 2 described above, due to assistance of the first carrier, where for example, the first information transmitted on the first carrier includes the partial information or all the information in the SIB 1 transmitted on the second carrier, or for another example, the SSB may be transmitted on the first carrier, the terminal device can directly obtain the common information for accessing the network device through the second carrier, to reduce a process in which the terminal device detects the common information on the second carrier. This not only does not affect performance and experience of accessing the network device by the terminal device through the second carrier, but also reduces a delay of accessing the network device by the terminal device through the second carrier.

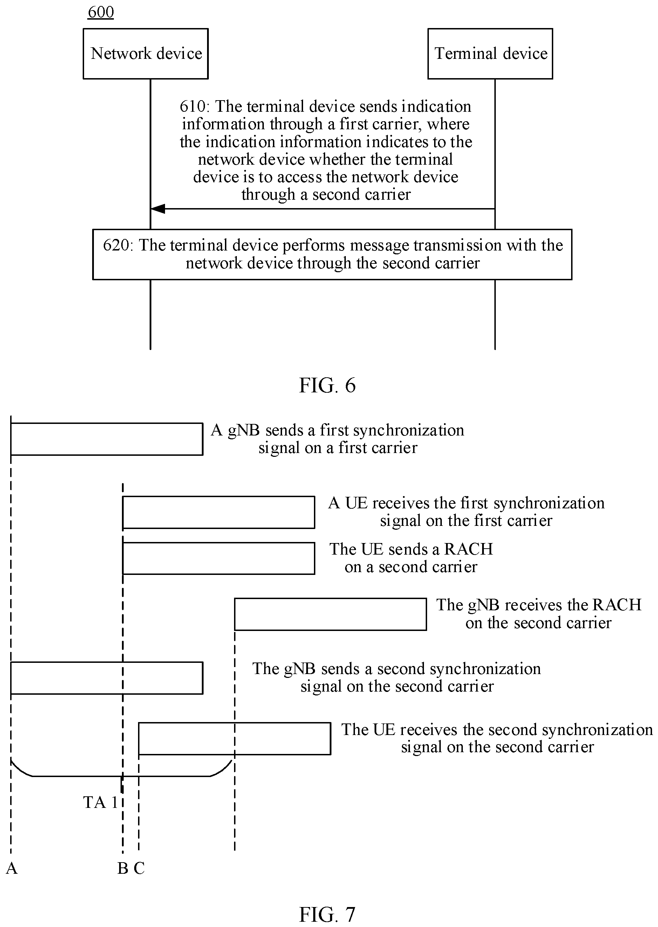

FIG. 6 is a diagram of an information transmission method 600 according to an embodiment of this application. The method 600 may include the following steps.

610: A terminal device sends indication information to a network device through a first carrier, where the indication information indicates to the network device whether the terminal device is to access the network device through a second carrier. Correspondingly, the network device receives the indication information through the first carrier.

The following lists several possible forms of the indication information.

Form 1: A resource of the indication information may indicate, to the network device, whether the terminal device is to access the network device through the second carrier. In other words, the indication information implicitly indicates that the terminal device is to access the network device through the second carrier. For example, if the terminal device sends the indication information to the network device on the first carrier by using a resource #1, it indicates that the terminal device is to access the network device through the first carrier; or if the terminal device sends the indication information to the network device on the first carrier by using a resource #2, it indicates that the terminal device is to access the network device through the second carrier. Correspondingly, if the network device receives the indication information via the resource #1, the network device learns that the terminal device is to perform access through the first carrier; or if the network device receives the indication information via the resource #2, the network device learns that the terminal device is to perform access through the second carrier.

Form 2: The indication information includes information indicating whether the terminal device is to access the network device through the second carrier, namely, information that indicates that the terminal device is to access the network device through the second carrier and that is displayed in the indication information. For example, the indication information includes an indication field, the indication field indicates whether the terminal device is to access the network device through the second carrier, and the indication field may be implemented via one or more bits. For example, one bit indicates whether the terminal device is to access the network device through the second carrier. For example, if the bit is set to "1", it indicates that the terminal device is to access the network device through the second carrier; or if the bit is set to "0", it indicates that the terminal device is to access the network device through the first carrier. Further, optionally, different status values of the one or more bits in the indication field indicate whether the network device is to access the network device through or not through the second carrier. Still, one bit is used as an example. If the bit is set to "1", it indicates that the terminal device is to access the network device through the second carrier. If the bit is set to "0", it indicates that the terminal device is to access the network device not through the second carrier, or it indicates that the terminal device is to access the network device through the first carrier.

Form 3: A sequence of the indication information may indicate, to the network device, whether the terminal device is to access the network device through the second carrier. In other words, when sequences of the indication information are different, the different sequences may respectively indicate whether the terminal device is to access the network device through or not through the second carrier. For example, if the sequence of the indication information sent by the terminal device to the network device is a first sequence, it indicates that the terminal device is to access the network device through the first carrier; or if the sequence of the indication information sent by the terminal device to the network device is a second sequence, it indicates that the terminal device is to access the network device through the second carrier. Correspondingly, if the sequence of the indication information received by the network device is the first sequence, the network device learns that the terminal device is to perform access through the first carrier; or if the sequence of the indication information received by the network device is the second sequence, the network device learns that the terminal device is to perform access through the second carrier.

It may be understood that, the foregoing is an example for description, and this is not limited.

If in step 610, the indication information indicates, to the network device, that the terminal device performs access through the second carrier, the method 600 further includes step 620.

620: The terminal device performs message transmission with the network device through the second carrier.

An example is as follows: For the terminal device, for example, the terminal device sends a message to the network device on the second carrier; or for another example, the terminal device receives a message from the network device on the second carrier. For the network device, the network device learns, based on the indication information, that the terminal device performs access through the second carrier. Therefore, in response to the indication information, the network device may send the message to the terminal device through the second carrier, or receive the message from the terminal device through the second carrier.

In step 620, that the terminal device performs message transmission with the network device through the second carrier may also be understood as that the terminal device accesses the network device through the second carrier, or the terminal device performs message transmission with the network device through the second carrier, to access the network device. For a solution in which the terminal device accesses the network device through the second carrier, refer to Solution 1 or Solution 2 in the method 500. Details are not described herein again.

Based on this embodiment of this application, after receiving trigger of the terminal device, the network device learns, for example, based on the trigger of the terminal device, that the terminal device is to access the network device through the second carrier, and then transmits information on the second carrier. In this way, signaling overheads caused by transmitting the foregoing information on the second carrier can be reduced, and energy consumption overheads caused by periodically transmitting the foregoing information on the second carrier can be reduced.

Optionally, before step 610, the method 600 further includes: The terminal device receives a synchronization signal from the network device through the first carrier. In this way, the terminal device can perform timing synchronization based on the synchronization signal, and further can correctly receive the indication information in step 610.

Optionally, before step 620, the method 600 further includes: The terminal device receives first information from the network device through the first carrier. For the first information, refer to related descriptions in the method 500. Details are not described herein again.

It may be understood that, all the solutions mentioned in the method 500 may be applied to the method 600. For brevity herein, details are not described again.

With reference to the solution 500 and the solution 600, the foregoing describes a related solution in which signaling overheads on the second carrier can be reduced through assistance between carriers. For example, the network device sends, to the terminal device through the first carrier, some information, namely, the first information, required when the terminal device accesses the network device through the second carrier. For another example, the terminal device notifies, on the first carrier, that the terminal device is to access the network device through the second carrier. The following describes a TA-related solution. The TA-related solution described below may be used together with the method 500 or the method 600, or may be used independently. This is not limited.

As described above, in some cases, the network device may send synchronization signals on both the first carrier and the second carrier. Correspondingly, the terminal device receives the synchronization signals on both the first carrier and the second carrier. Because the synchronization signals are transmitted on different carriers, duration for transmission may be different. In this case, reference points for performing timing synchronization by the terminal device based on the two received synchronization signals are also different. Consequently, TA mismatch occurs. For ease of understanding, the following provides example description with reference to FIG. 7.

FIG. 7 is a diagram of TA mismatch.

As shown in FIG. 7, a gNB may send a first synchronization signal on a first carrier. Correspondingly, a UE receives the first synchronization signal on the first carrier, and the UE may perform timing synchronization based on the first synchronization signal, for example, determine a reference point B in FIG. 7. The gNB may further send a second synchronization signal on a second carrier. Correspondingly, the UE receives the second synchronization signal on the second carrier, and the UE may perform timing synchronization based on the second synchronization signal, for example, determine a reference point C in FIG. 7. Optionally, the gNB further indicates a TA 1 to the UE, where the TA 1 is for performing uplink timing synchronization by the UE. For example, the gNB sends a RAR to the UE, where the RAR includes the TA 1. A terminal device separately performs timing synchronization based on the first synchronization signal on the first carrier and the second synchronization signal on the second carrier, and determines the two different reference points: the point B and the point C in FIG. 7. Therefore, the terminal device needs to determine a reference point to be used to adjust the TA 1, and can further implement timing synchronization. The following describes two possible solutions.

Solution A: The terminal device performs uplink synchronization based on a synchronization signal received on the first carrier, and performs downlink synchronization based on a synchronization signal received on the second carrier.

For example, the terminal device receives the first synchronization signal from a network device through the first carrier; the terminal device receives the second synchronization signal from the network device through the second carrier; and the terminal device performs uplink synchronization based on the first synchronization signal, and performs downlink synchronization based on the second synchronization signal. FIG. 7 is used as an example. The UE performs uplink synchronization by using the reference point B, namely, a reference point determined based on the first synchronization signal received on the first carrier, as a reference. The UE performs downlink synchronization by using the reference point C, namely, a reference point determined based on the second synchronization signal received on the second carrier, as a reference.

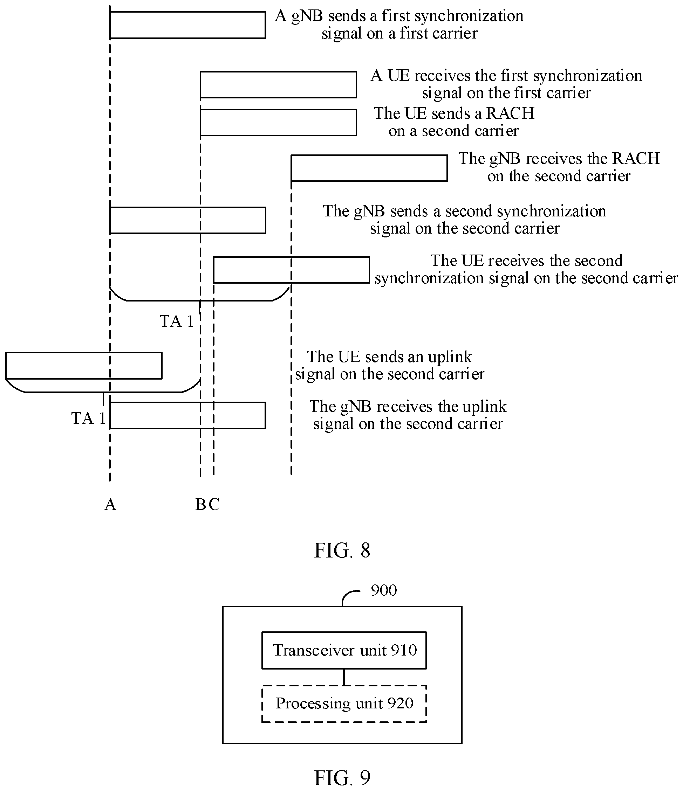

FIG. 8 is a diagram of timing synchronization applicable to an embodiment of this application.

As shown in FIG. 8, the gNB sends the first synchronization signal on the first carrier, and correspondingly, the UE receives the first synchronization signal on the first carrier. The gNB sends the second synchronization signal on the second carrier, and correspondingly, the UE receives the second synchronization signal on the second carrier. Based on Solution A, the UE performs uplink synchronization based on the first synchronization signal, for example, determines the reference point B; and the UE performs downlink synchronization based on the second synchronization signal, for example, determines the reference point C. As shown in FIG. 8, after performing uplink synchronization by using the reference point B as a reference, the terminal device sends an uplink signal on the second carrier based on the timing advance TA 1; and correspondingly, the gNB may receive the uplink signal based on a reference point A. After the terminal device performs uplink synchronization by using the reference point B as a reference, it can be ensured that uplink signals transmitted by different terminal devices arrive at the gNB at a same time point, namely, the reference point A. In addition, when receiving a downlink signal from the network device, the terminal device may receive the downlink signal by using the reference point C, determined based on the second synchronization signal, as a reference.

Based on Solution A, a time reference point at which the terminal device receives the downlink signal may be different from a time reference point at which the terminal device receives the uplink signal.

Solution B: The terminal device performs uplink synchronization and downlink synchronization based on a synchronization signal received on the second carrier.

For example, the terminal device performs downlink synchronization based on the second synchronization signal, and the terminal device performs uplink synchronization based on the second synchronization signal and an offset.

The offset represents an offset between receiving the first synchronization signal and receiving the second synchronization signal by the terminal device. It may be understood that, the offset may be the offset between receiving the first synchronization signal and receiving the second synchronization signal by the terminal device, or may be another parameter. The another parameter may indicate the offset between receiving the first synchronization signal and receiving the second synchronization signal by the terminal device. FIG. 7 is used as an example. The offset may represent a difference between the reference point B and the reference point C.

In a first possible manner, the terminal device receives the offset, so that the terminal device can perform uplink synchronization based on the second synchronization signal and the offset.

Optionally, the offset may be carried in a third message, and the third message is used by the terminal device to access the network device through the second carrier. In other words, the offset may be obtained in a process in which the terminal device accesses the network device through the second carrier. For example, the third message is a Msg 2 or a Msg 4, in other words, the offset is carried in the Msg 2 or the Msg 4. If the offset is carried in the Msg 2, in a random access process, the network device may indicate the TA 1 and the offset in the Msg 2, and the terminal device completes uplink synchronization based on the TA 1 and the offset. If the offset is carried in the Msg 4, in a random access process, the network device may indicate the TA 1 in the Msg 2, and indicate the offset in the Msg 4. The terminal device completes uplink synchronization based on two adjustments, to be specific, based on the TA 1 in the Msg 2 and the offset in the Msg 4.

For example, Solution 1 in the foregoing method 500 is used as an example. The third message is any one of the following: a response message of a first message, second information, or the Msg 4. In other words, the offset may be carried in any one of the following: the response message of the first message, the second information, or the Msg 4.

For another example, Solution 2 in the method 500 is used as an example. The third message is any one of the following: second common information, a response message of a second message, third common information, or the Msg 4. In other words, the offset may be carried in any one of the following: the second common information, the response message of the second message, the third common information, or the Msg 4.

In a second possible manner, the terminal device calculates the offset, so that the terminal device can perform uplink synchronization based on the second synchronization signal and the offset.

The example shown in FIG. 7 is used as an example. After receiving the TA 1 indicated by the network device, the terminal device may calculate the difference between the reference point B and the reference point C, to obtain the offset, and then adjust the TA 1 based on the offset. It may be understood that, a value of a timing advance TA used when the terminal device sends an uplink signal is TA 1+T1. T1 is the offset, and represents the difference between the reference point C and the reference point B. It may be understood that, if the reference point C is located after the reference point B, for example, in FIG. 7, the reference point C is located after the reference point B, T1 is greater than 0; or if the reference point C is located before the reference point B, T1 is less than 0.

Further, optionally, the terminal device may notify the network device of the offset. In this way, the network device may not need to calculate the offset. This reduces complexity of the network device. For example, the offset may be carried in a Msg 3.

It may be understood that, in some of the foregoing embodiments, "transmitting" is mentioned. Unless otherwise specified, "transmitting" includes receiving and/or sending. For example, transmitting a signal may include receiving a signal and/or sending a signal.

It may be further understood that, in some of the foregoing embodiments, "detecting" is mentioned. Unless otherwise specified, "detecting" may represent "monitoring". For example, detecting a signal may include monitoring a signal.

It may be further understood that, in this application, "first" and "second" are merely used for differentiation for ease of description, and are not used to limit the scope of embodiments of this application. For example, the terms are for differentiating between different information and the like.

It may be further understood that, in some of the foregoing embodiments, "the terminal device accesses the network device" is mentioned for a plurality of times. Unless otherwise specified, "the terminal device accesses the network device" may represent that the terminal device performs initial access, or the terminal device performs random access, or the terminal device performs an operation related to initial access. "Perform" may be replaced with "execute". "The terminal device accesses the network device" does not mean, as a limitation, that the terminal device can definitely successfully access the network device. In actual communication, by performing the operation related to initial access, the terminal device may successfully access the network device, or may access the network device unsuccessfully. This is not limited in embodiments of this application.

It may be further understood that, in the foregoing embodiments, the first common information may be replaced with the SIB 1, the second common information may be replaced with the synchronization signal block SSB, or the second common information may be replaced with a reference signal.

It may be further understood that, some optional features in embodiments of this application may not depend on another feature in some scenarios, or may be combined with another feature in some scenarios. This is not limited.

It may be further understood that, the solutions in embodiments of this application may be properly combined for use, and explanations or descriptions of terms in embodiments may be mutually referenced or explained in embodiments. This is not limited.

It may be further understood that, values of various numerical sequence numbers in embodiments of this application do not mean execution sequences, and are distinguished only for ease of description, and should not constitute any limitation on an implementation process of embodiments of this application.

It may be further understood that, in the foregoing method embodiments, methods and operations implemented by a device may also be implemented by a component (for example, a chip or a circuit) of the device.

Corresponding to the methods provided in the foregoing method embodiments, embodiments of this application further provide a corresponding apparatus. The apparatus includes corresponding modules configured to perform the foregoing method embodiments. The module may be software, hardware, or a combination of software and hardware. It may be understood that, the technical features described in the foregoing method embodiments are also applicable to the following apparatus embodiments. In this embodiment of this application, the apparatus may be one of the terminals 120a to 120j shown in FIG. 1, or may be the base station 110a or 110b shown in FIG. 1, or may be a module (such as a chip) used in the terminal or the base station.

FIG. 9 is a diagram of a communication apparatus 900 according to an embodiment of this application. The apparatus 900 includes a transceiver unit 910, and the transceiver unit 910 may be configured to implement a corresponding communication function. The transceiver unit 910 may be further referred to as a communication interface or a communication unit.

Optionally, the apparatus 900 may further include a processing unit 920, and the processing unit 920 may be configured to perform data processing.

Optionally, the apparatus 900 further includes a storage unit. The storage unit may be configured to store instructions and/or data. The processing unit 920 may read the instructions and/or the data in the storage unit, to enable the apparatus to implement actions performed by the terminal device or the network device in the foregoing method embodiments.

The apparatus 900 may be configured to perform actions performed by the terminal device in the foregoing method embodiments. For example, the apparatus 900 may be configured to perform actions performed by the terminal device in the foregoing embodiment in FIG. 5 or FIG. 6. In this case, the apparatus 900 may be a component of the terminal device. The transceiver unit 910 is configured to perform receiving and sending-related operations on a terminal device side in the foregoing method embodiments, and the processing unit 920 is configured to perform processing-related operations on the terminal device side in the foregoing method embodiments.

When the apparatus 900 is configured to implement functions of the terminal device in the method embodiment shown in FIG. 5, the transceiver unit 910 is configured to receive first information from the network device through a first carrier; and the transceiver unit 910 is further configured to perform message transmission with the network device through a second carrier.

For more detailed descriptions of the transceiver unit 910 and the processing unit 920, directly refer to related descriptions in the method embodiment shown in FIG. 5. Details are not described herein.

When the apparatus 900 is configured to implement functions of the terminal device in the method embodiment shown in FIG. 6, the transceiver unit 910 is configured to send indication information to a network device through a first carrier, where the indication information indicates to the network device whether the terminal device is to access the network device through a second carrier; and the transceiver unit 910 is further configured to perform message transmission with the network device through the second carrier.

For more detailed descriptions of the transceiver unit 910 and the processing unit 920, directly refer to related descriptions in the method embodiment shown in FIG. 6. Details are not described herein.

The apparatus 900 may be configured to perform actions performed by the network device in the foregoing method embodiments. For example, the apparatus 900 may be configured to perform actions performed by the network device in the foregoing embodiment in FIG. 5 or FIG. 6. In this case, the apparatus 900 may be a component of the network device. The transceiver unit 910 is configured to perform receiving and sending-related operations on a network device side in the foregoing method embodiments, and the processing unit 920 is configured to perform processing-related operations on the network device side in the foregoing method embodiments.

When the apparatus 900 is configured to implement functions of the network device in the method embodiment shown in FIG. 5, the transceiver unit 910 is configured to send first information to a terminal device through a first carrier; and the transceiver unit 910 is further configured to perform message transmission with the terminal device through a second carrier.

For more detailed descriptions of the transceiver unit 910 and the processing unit 920, directly refer to related descriptions in the method embodiment shown in FIG. 5. Details are not described herein.

When the apparatus 900 is configured to implement functions of the network device in the method embodiment shown in FIG. 6, the transceiver unit 910 is configured to receive indication information from a terminal device through a first carrier, where the indication information indicates, to the network device, whether the network device accesses the network device through a second carrier; and the transceiver unit 910 is further configured to perform message transmission with the terminal device through the second carrier.

For more detailed descriptions of the transceiver unit 910 and the processing unit 920, directly refer to related descriptions in the method embodiment shown in FIG. 6. Details are not described herein.

It should be further understood that, the apparatus 900 is embodied in a form of a functional unit. The term "unit" herein may refer to an application-specific integrated circuit (application-specific integrated circuit, ASIC), an electronic circuit, a processor (for example, a shared processor, a dedicated processor, or a group processor) and a memory that are configured to execute one or more software or firmware programs, a combined logic circuit, and/or another suitable component that supports the described functions. In an optional example, a person skilled in the art may understand that, the apparatus 900 may be specifically the terminal device in the foregoing embodiments, and may be configured to perform procedures and/or steps corresponding to the terminal device in the foregoing method embodiments, or the apparatus 900 may be specifically the network device in the foregoing embodiments, may be configured to perform procedures and/or steps corresponding to the network device in the foregoing method embodiments. To avoid repetition, details are not described herein again.

The apparatus 900 in the foregoing solutions has a function of implementing corresponding steps performed by the terminal device in the foregoing methods, or the apparatus 900 in the foregoing solutions has a function of implementing corresponding steps performed by the network device in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit may be replaced with a processor, to separately perform receiving and sending operations and related processing operations in the method embodiments.

In addition, the transceiver unit 910 may alternatively be a transceiver circuit (for example, may include a receiver circuit and a transmitter circuit), and the processing unit may be a processing circuit.

It should be noted that, the apparatus in FIG. 9 may be a network element or a device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

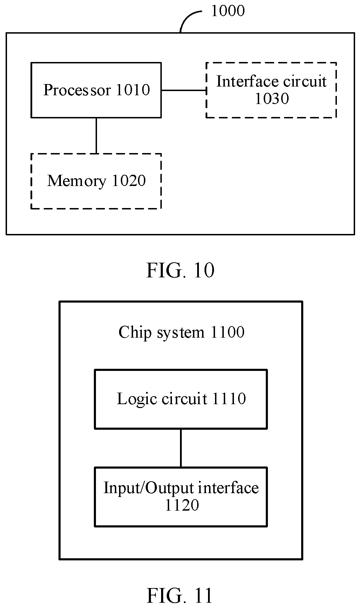

FIG. 10 is a diagram of another communication apparatus 1000 according to an embodiment of this application. The apparatus 1000 includes a processor 1010. The processor 1010 is coupled to a memory 1020. The memory 1020 is configured to store a computer program or instructions and/or data. The processor 1010 is configured to: execute the computer program or the instructions stored in the memory 1020, or read data stored in the memory 1020, to perform the method in the foregoing method embodiments.

Optionally, there are one or more processors 1010.

Optionally, there are one or more memories 1020.

Optionally, the memory 1020 and the processor 1010 are integrated together, or are disposed separately.

Optionally, as shown in FIG. 10, the apparatus 1000 further includes an interface circuit 1030. The interface circuit 1030 is configured to receive and/or send a signal. The processor 1010 and the interface circuit 1030 are coupled to each other. For example, the processor 1010 is configured to control the interface circuit 1030 to receive and/or send a signal. It may be understood that, the interface circuit 1030 may be a transceiver or an input/output interface.

When the apparatus 1000 is configured to implement the method shown in FIG. 5 or FIG. 6, the processor 1010 is configured to implement a function of the processing unit 920, and the interface circuit 1030 is configured to implement a function of the transceiver unit 910.

In a solution, the apparatus 1000 is configured to implement operations performed by a terminal device in the foregoing method embodiments.

For example, the processor 1010 is configured to execute the computer program or the instructions stored in the memory 1020, to implement related operations of the terminal device in the foregoing method embodiments, for example, the method performed by the terminal device in the embodiment shown in FIG. 5 or FIG. 6.

In a solution, the apparatus 1000 is configured to implement operations performed by the network device in the foregoing method embodiments.

For example, the processor 1010 is configured to execute the computer program or the instructions stored in the memory 1020, to implement related operations of the network device in the foregoing method embodiments, for example, the method performed by the network device in the embodiment shown in FIG. 5 or FIG. 6.

When the communication apparatus is a chip used in a terminal, the terminal chip implements a function of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station, the module in the base station implements a function of the base station in the foregoing method embodiments. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that, the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example but not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that, the memory described in this specification aims to include but is not limited to these memories and any memory of another proper type.

FIG. 11 is a diagram of a chip system 1100 according to an embodiment of this application. The chip system 1100 (or may also be referred to as a processing system) includes a logic circuit 1110 and an input/output interface (input/output interface) 1120.

The logic circuit 1110 may be a processing circuit in the chip system 1100. The logic circuit 1110 may be coupled to and connected to a storage unit, and invoke instructions in the storage unit, so that the chip system 1100 can implement methods and functions in embodiments of this application. The input/output interface 1120 may be an input/output circuit in the chip system 1100, and outputs information processed by the chip system 1100, or inputs to-be-processed data or signaling information into the chip system 1100 for processing.

Specifically, for example, if the chip system 1100 is installed in a terminal device, the logic circuit 1110 is coupled to the input/output interface 1120, and the logic circuit 1110 may discover a message from a network device via the input/output interface 1120. The message may be generated by the logic circuit 1110. Alternatively, the input/output interface 1120 may input first information from the network device into the logic circuit 1110 for processing. For another example, if the chip system 1100 is installed in the network device, the logic circuit 1110 is coupled to the input/output interface 1120, and the logic circuit 1110 may send the first information to the terminal device via the input/output interface 1120. The first information may be generated by the logic circuit 1110. Alternatively, the input/output interface 1120 may input a message from the terminal device into the logic circuit 1110 for processing.

In a solution, the chip system 1100 is configured to implement operations performed by the terminal device in the foregoing method embodiments.

For example, the logic circuit 1110 is configured to implement processing-related operations performed by the terminal device in the foregoing method embodiments, for example, processing-related operations performed by the terminal device in the embodiment shown in FIG. 5 or FIG. 6. The input/output interface 1120 is configured to implement sending and/or receiving-related operations performed by the terminal device in the foregoing method embodiments, for example, sending and/or receiving-related operations performed by the terminal device in the embodiment shown in FIG. 5 or FIG. 6.

In another solution, the chip system 1100 is configured to implement operations performed by the network device in the foregoing method embodiments.

For example, the logic circuit 1110 is configured to implement processing-related operations performed by the network device in the foregoing method embodiments, for example, processing-related operations performed by the network device in the embodiment shown in FIG. 5 or FIG. 6. The input/output interface 1120 is configured to implement sending and/or receiving-related operations performed by the network device in the foregoing method embodiments, for example, sending and/or receiving-related operations performed by the network device in the embodiment shown in FIG. 5 or FIG. 6.

Embodiments of this application further provide a computer-readable storage medium, where the computer-readable storage medium stores computer instructions used to implement the method performed by the terminal device or the network device in the foregoing method embodiments.

For example, when the computer program is executed by a computer, the computer is enabled to implement the method performed by the terminal device or the network device in the foregoing method embodiments.

Embodiments of this application further provide a computer program product, including instructions.
When the instructions are executed by a computer, the method performed by the terminal device or the network device in the foregoing method embodiments is implemented.

Embodiments of this application further provide a communication system. The communication system includes the terminal device and the network device in the foregoing embodiments. For example, the system includes the terminal device and the network device in the embodiment shown in FIG. 5 or FIG. 6.

For explanations and beneficial effect of related content of any one of the apparatuses provided above, refer to the corresponding method embodiment provided above. Details are not described herein again.

In the several embodiments provided in this application, it should be understood that, the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wireline (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the foregoing usable medium includes but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
receiving first information from a network device through a first carrier, wherein the first information comprises at least one of the following: resource information used to access the network device through a second carrier, partial information or all information in first common information, and resource information for transmitting second common information through the second carrier, wherein the first common information and the second common information are for accessing the network device through the second carrier; and
performing message transmission with the network device through the second carrier.

2. The method according to claim 1, wherein the first information further comprises at least one of a time window or a frequency domain position of the second carrier, and the time window is an effective time range for detecting a signal sent by the network device through the second carrier.

3. The method according to claim 1 or 2, wherein the performing message transmission with the network device through the second carrier comprises:
receiving partial information or all information in the first common information through the second carrier, and/or receiving the second common information through the second carrier.

4. The method according to any one of claims 1 to 3, wherein the method further comprises:
sending a first message to the network device through the first carrier, wherein the first message indicates to access the network device through the second carrier, and a time-frequency resource and/or a sequence of the first message are/is determined based on the first information.

5. The method according to claim 4, wherein the method further comprises:
receiving second information from the network device through the second carrier, wherein the second information comprises at least one of the following information: a response message of the first message, downlink control information for scheduling the response message of the first message, or downlink control information for scheduling the second common information.

6. The method according to any one of claims 1 to 3, wherein the performing message transmission with the network device through the second carrier comprises:
sending a second message to the network device through the second carrier, wherein the second message is for accessing the network device.

7. The method according to claim 6, wherein before the sending a second message to the network device through the second carrier, the method further comprises:
receiving the second common information from the network device through the second carrier; and
the sending a second message to the network device through the second carrier comprises:
sending, based on the second common information and the first information, the second message to the network device through the second carrier.

8. The method according to claim 7, wherein the method further comprises:
receiving third common information from the network device through the second carrier; and
the sending, based on the second common information and the first information, the second message to the network device through the second carrier comprises:
sending, based on the second common information, the first information, and the third common information, the second message to the network device through the second carrier, wherein
the third common information comprises all the information in the first common information; or the first information comprises the partial information in the first common information, and the third common information comprises information in the first common information other than the partial information.

9. The method according to claim 6, wherein after the sending a second message to the network device through the second carrier, the method further comprises:
receiving the second common information and/or a response message of the second message from the network device through the second carrier.

10. The method according to any one of claims 1 to 9, wherein before the performing message transmission with the network device through the second carrier, the method further comprises:
sending indication information to the network device through the first carrier, wherein the indication information indicates whether to access the network device through the second carrier; and
the performing message transmission with the network device through the second carrier comprises:
performing message transmission with the network device through the second carrier if the indication information indicates to access the network device through the second carrier.

11. The method according to claim 10, wherein the indication information comprises information indicating whether to access the network device through the second carrier.

12. The method according to claim 10, wherein a resource of the indication information indicates whether to access the network device through the second carrier.

13. The method according to any one of claims 1 to 12, wherein the method further comprises:
receiving a first synchronization signal from the network device through the first carrier;
receiving a second synchronization signal from the network device through the second carrier;
performing downlink synchronization based on the second synchronization signal; and
performing uplink synchronization based on the first synchronization signal, or performing uplink synchronization based on the second synchronization signal and an offset, wherein the offset represents an offset between receiving the first synchronization signal and receiving the second synchronization signal.

14. The method according to claim 13, wherein the method further comprises:
receiving the offset from the network device through the second carrier.

15. The method according to claim 14, wherein the offset is carried in a third message, and the third message is for accessing the network device.

16. An information transmission method, comprising:
sending first information to a terminal device through a first carrier, wherein the first information comprises at least one of the following: resource information used to access a network device through a second carrier, partial information or all information in first common information, and resource information for transmitting second common information through the second carrier, wherein the first common information and the second common information are for accessing the network device through the second carrier; and
performing message transmission with the terminal device through the second carrier.

17. The method according to claim 16, wherein the first information further comprises at least one of a time window or a frequency domain position of the second carrier, and the time window is an effective time range for detecting a signal sent by the network device through the second carrier.

18. The method according to claim 16 or 17, wherein the performing message transmission with the terminal device through the second carrier comprises:
sending the partial information or all the information in the first common information to the terminal device through the second carrier, and/or sending the second common information to the terminal device through the second carrier.

19. The method according to any one of claims 16 to 18, wherein the method further comprises:
receiving a first message from the terminal device through the first carrier, wherein the first message indicates to access the network device through the second carrier, and a time-frequency resource and/or a sequence of the first message are/is determined based on the first information.

20. The method according to claim 19, wherein the method further comprises:
sending second information to the terminal device through the second carrier, wherein the second information comprises at least one of the following information: a response message of the first message, downlink control information for scheduling the response message of the first message, or downlink control information for scheduling the second common information.

21. The method according to any one of claims 16 to 18, wherein the performing message transmission with the terminal device through the second carrier comprises:
receiving a second message from the terminal device through the second carrier, wherein the second message is for accessing the network device.

22. The method according to claim 21, wherein before the receiving a second message from the terminal device through the second carrier, the method further comprises:
sending the second common information to the terminal device through the second carrier.

23. The method according to claim 22, wherein the method further comprises:
sending third common information to the terminal device through the second carrier, wherein
the third common information comprises all the information in the first common information; or the first information comprises the partial information in the first common information, and the third common information comprises information in the first common information other than the partial information.

24. The method according to claim 21, wherein after the receiving a second message from the terminal device through the second carrier, the method further comprises:
sending the second common information and/or a response message of the second message to the terminal device through the second carrier.

25. The method according to any one of claims 16 to 24, wherein before the performing message transmission with the terminal device through the second carrier, the method further comprises:
receiving indication information from the terminal device through the second carrier, wherein the indication information indicates whether to access the network device through the second carrier; and
the performing message transmission with the terminal device through the second carrier comprises:
performing message transmission with the terminal device through the second carrier if the indication information indicates to access the network device through the second carrier.

26. The method according to claim 25, wherein the indication information comprises information indicating whether to access the network device through the second carrier.

27. The method according to claim 25, wherein a resource of the indication information indicates whether to access the network device through the second carrier.

28. The method according to any one of claims 16 to 27, wherein the method further comprises:
sending a first synchronization signal to the terminal device through the first carrier; and
sending a second synchronization signal to the terminal device through the second carrier, wherein the second synchronization signal is for downlink synchronization, and
the first synchronization signal is for uplink synchronization, or the second synchronization signal and an offset are for uplink synchronization, wherein the offset represents an offset between receiving the first synchronization signal and receiving the second synchronization signal.

29. The method according to claim 28, wherein the method further comprises:
sending the offset to the terminal device through the second carrier.

30. The method according to claim 29, wherein the offset is carried in a third message, and the third message is for accessing the network device.

31. An information transmission method, comprising:
sending, by a network device, first information to a terminal device through a first carrier, wherein the first information comprises at least one of the following: resource information used to access the network device through a second carrier, partial information or all information in first common information, and resource information for transmitting second common information through the second carrier, wherein the first common information and the second common information are for accessing the network device through the second carrier;
receiving, by the terminal device, the first information through the first carrier; and
performing message transmission between the network device and the terminal device through the second carrier.

32. The method according to claim 31, wherein the first information further comprises at least one of a time window or a frequency domain position of the second carrier, and the time window is an effective time range for detecting a signal sent by the network device through the second carrier.

33. The method according to claim 31 or 32, wherein the performing message transmission between the network device and the terminal device through the second carrier comprises:
sending, by the network device, the partial information or all the information in the first common information to the terminal device through the second carrier, and receiving, by the terminal device, the partial information or all the information in the first common information through the second carrier; and/or
sending, by the network device, the second common information to the terminal device through the second carrier, and receiving, by the terminal device, the second common information through the second carrier.

34. The method according to any one of claims 31 to 33, wherein the method further comprises:
sending, by the terminal device, a first message to the network device through the first carrier, wherein the first message indicates to access the network device through the second carrier, and a time-frequency resource and/or a sequence of the first message are/is determined based on the first information; and
receiving, by the network device, the first message through the first carrier.

35. The method according to claim 34, wherein the method further comprises:
sending, by the network device, second information to the terminal device through the second carrier, wherein the second information comprises at least one of the following information: a response message of the first message, downlink control information for scheduling the response message of the first message, or downlink control information for scheduling the second common information; and
receiving, by the terminal device, the second information through the second carrier.

36. The method according to any one of claims 31 to 33, wherein the performing message transmission between the network device and the terminal device through the second carrier comprises:
sending, by the terminal device, a second message to the network device through the second carrier, wherein the second message is for accessing the network device; and
receiving, by the network device, the second message through the second carrier.

37. The method according to claim 36, wherein before the sending, by the terminal device, a second message to the network device through the second carrier, and receiving, by the network device, the second message, the method further comprises:
sending, by the network device, the second common information to the terminal device through the second carrier;
receiving, by the terminal device, the second common information through the second carrier; and
the sending, by the terminal device, a second message to the network device through the second carrier comprises:
sending, by the terminal device based on the second common information and the first information, the second message to the network device through the second carrier.

38. The method according to claim 37, wherein the method further comprises:
sending, by the network device, third common information to the terminal device through the second carrier;
receiving, by the terminal device, the third common information through the second carrier; and
the sending, by the terminal device based on the second common information and the first information, the second message to the network device through the second carrier comprises:
sending, by the terminal device based on the second common information, the first information, and the third common information, the second message to the network device through the second carrier, wherein
the third common information comprises all the information in the first common information; or the first information comprises the partial information in the first common information, and the third common information comprises information in the first common information other than the partial information.

39. The method according to claim 36, wherein after the sending, by the terminal device, a second message to the network device through the second carrier, and receiving, by the network device, the second message through the second carrier, the method further comprises:
sending, by the network device, the second common information and/or a response message of the second message to the terminal device through the second carrier; and
receiving, by the terminal device, the second common information and/or the response message of the second message through the second carrier.

40. The method according to any one of claims 31 to 39, wherein before the performing message transmission between the network device and the terminal device through the second carrier, the method further comprises:
sending, by the terminal device, indication information to the network device through the first carrier, wherein the indication information indicates whether to access the network device through the second carrier;
receiving, by the network device, the indication information through the second carrier; and
the performing message transmission between the network device and the terminal device through the second carrier comprises:
performing message transmission between the network device and the terminal device through the second carrier if the indication information indicates to access the network device through the second carrier.

41. The method according to claim 40, wherein the indication information comprises information indicating whether to access the network device through the second carrier.

42. The method according to claim 40, wherein a resource of the indication information indicates whether to access the network device through the second carrier.

43. The method according to any one of claims 31 to 42, wherein the method further comprises:
sending, by the network device, a first synchronization signal to the terminal device through the first carrier;
receiving, by the terminal device, the first synchronization signal through the first carrier;
sending, by the network device, a second synchronization signal to the terminal device through the second carrier;
receiving, by the terminal device, the second synchronization signal through the second carrier;
performing, by the terminal device, downlink synchronization based on the second synchronization signal; and
performing, by the terminal device, uplink synchronization based on the first synchronization signal, or performing uplink synchronization based on the second synchronization signal and an offset, wherein the offset represents an offset between receiving the first synchronization signal and receiving the second synchronization signal.

44. The method according to claim 43, wherein the method further comprises:
sending, by the network device, the offset to the terminal device through the second carrier; and
receiving, by the terminal device, the offset through the second carrier.

45. The method according to claim 44, wherein the offset is carried in a third message, and the third message is for accessing the network device.

46. A communication apparatus, comprising: a processor and a memory, wherein the processor is configured to execute a computer program stored in the memory, to enable the apparatus to perform the method according to any one of claims 1 to 15, or to enable the apparatus to perform the method according to any one of claims 16 to 30.

47. A computer-readable storage medium, wherein a computer program is stored in the computer-readable storage medium; and when the computer program is run on a computer, the computer is enabled to perform the method according to any one of claims 1 to 15, or the computer is enabled to perform the method according to any one of claims 16 to 30.

48. A computer program product, wherein the computer program product comprises instructions for performing the method according to any one of claims 1 to 15, or the computer program product comprises instructions for performing the method according to any one of claims 16 to 30.

49. A communication system, comprising a terminal device and a network device, wherein
the terminal device is configured to perform the method according to any one of claims 1 to 15, or the network device is configured to perform the method according to any one of claims 16 to 30.

50. A communication apparatus, comprising a unit that has a function of implementing the method according to any one of claims 1 to 15 or the method according to any one of claims 16 to 30.

51. A communication apparatus, wherein the communication apparatus is configured to perform the method according to any one of claims 1 to 15.

52. A communication apparatus, wherein the communication apparatus is configured to perform the method according to any one of claims 16 to 30.
